# EUROPÄISCHE PATENTSCHRIFT

(11) **EP 2 753 472 B1**
(45) Veröffentlichungstag und Bekanntmachung des Hinweises auf die Patenterteilung: **06.01.2016**
(21) Anmeldenummer: 12775120.4
(22) Anmeldetag: 05.09.2012
(51) Int. Cl.: B41M 3/10, B41M 3/14, B42D 25/29

(54) **VERFAHREN ZUR ERHÖHUNG DER FÄLSCHUNGSSICHERHEIT EINES GEGENSTANDES**
METHOD FOR INCREASING THE COUNTERFEIT PROTECTION FOR AN ARTICLE
PROCÉDÉ POUR AUGMENTER LA SÉCURITÉ ANTI-FALSIFICATION D'UN OBJET

(30) Priorität: 05.09.2011 AT 12592011
(43) Veröffentlichungstag der Anmeldung: 16.07.2014
(73) Patentinhaber: Durst Phototechnik Digital Technology GmbH, 9900 Lienz (AT)
(72) Erfinder: KAPPAUN, Stefan, A-8522 Groß Sankt Florian (AT); STEHRING, Peter, A-8530 Deutschlandsberg (AT)
(74) Vertreter: Burger, Hannes
(86) Internationale Anmeldenummer: PCT/AT2012/050125
(87) Internationale Veröffentlichungsnummer: WO 2013/033742

(56) Entgegenhaltungen:
- WO-A1-01/83231
- WO-A1-98/15414
- WO-A1-2004/087430
- WO-A1-2008/110317

## Beschreibung

Die Erfindung betrifft ein Verfahren zur Erhöhung der Fälschungssicherheit eines Gegenstandes mit einem latenten Sicherheitsmerkmal entsprechend den Merkmalen im Oberbegriff des Anspruches 1 und einen fälschungssicheren Gegenstand entsprechend den Merkmalen im Oberbegriff des Anspruches 15.

An dieser Stelle sollen vorab einige in diesem Dokument verwendeten Begriffe definiert werden: Der Begriff "Wasserzeichen" ist als Synonym für den Begriff "Sicherheitsmerkmal" im Kontext zu verstehen.

Der Begriff "latent" ist im üblichen Sprachgebrauch zu verstehen.

Der Begriff "Rasterdichte" ist als Synonym für den Begriff "Tintentropfendichte" im Kontext zu verstehen.

Wasserzeichen gehören zu den bekanntesten und weitverbreitetsten Sicherheitsmerkmalen, zumal sie durch den Einsatz in z.B. Geldscheinen oder Dokumenten mit erhöhter Fälschungssicherheit der breiten Öffentlichkeit zugänglich sind. Bei herkömmlichen Wasserzeichen handelt es sich um bildhafte Darstellungen oder Schriftzüge auf Papiersubstraten, welche im Zuge der Substratherstellung eingearbeitet werden. Durch Variationen der Faserdichte und/oder der Packungsdichte der Substratfasern wird das gewünschte Wasserzeichen in der Feuchtherstellungsphase des Substrates realisiert. Da hierfür eine entsprechende Papierproduktionslinie benötigt wird bzw. der technische Aufwand für häufig wechselnde Motive zu groß wäre, werden die entsprechenden Substrate in großen Stückzahlen mit denselben, sich wiederholenden Wasserzeichenmotiven hergestellt.

Obwohl die Komplexität der klassischen Wasserzeichenherstellung sich vorteilhaft in einer hohen Fälschungssicherheit wiederspiegelt, besteht marktseitig große Nachfrage nach individualisierten Wasserzeichen in kleinen Stückzahlen bzw. mit häufig wechselnden Motiven (Schriftzügen, Firmenlogos, Barcodes usw.). In diesem Zusammenhang werden Wasserzeichen ansatzweise imitiert, indem die gewünschten bildhaften Darstellungen oder Schriftzüge in grau-schattierter Form mittels Laser- oder Tintenstrahldruck appliziert werden. Moderne Textverarbeitungsprogramme (z.B. Microsoft Word) haben diese Imitation von Wasserzeichen bereits fest implementiert, jedoch sind solche Wasserzeichenimitate aufgrund der leichten Nachahmung nicht für den Dokumentenschutz geeignet. Alternative Ansätze beruhen beispielsweise auf dem Tintenstrahldruck von Glykolen, Urethanen (WO 2008/009388 A1), A1-kyden und Polyestern (US 5,847,024 A), wässrigen Mischungen aus Natriumsalzen (CN 101812254 A), wässrigen Mischungen aus Polyvinylalkohol, Celluloseethern und Emulsionspolymeren (CN101735693 A), Ölen und Kohlenwasserstoffen (JP 2007-023121 A, JP 62-12108 A), Acrylaten und Methacrylaten (JP 71-50093 A) sowie Mischungen aus Alkoholen und Naturstoffen (z.B. Albumin, JP 60-087088 A). Bei diesen Konzepten handelt es sich durchgehend um permanent sichtbare Wasserzeichen, wobei die Fälschungssicherheit dieser mittels Tintenstrahl gedruckten Wasserzeichen deutlich größer ist als beim oben beschriebenen Druck von Grauschattierungen. Das Sicherheitsniveau von klassischen Wasserzeichen wird jedoch nicht erreicht.

Die EP 1 354 919 B1 beschreibt die Markierung von Dokumenten, Holz, Metall, usw. mittels (organischen) fluoreszenten Materialien. Die zugehörigen Fluoreszenzfarbstoffe werden in eine mittels energiereicher Strahlung härtbare Matrix eingebracht und auf den zu markierenden Gegenstand appliziert. Ähnlich wie bei Geldscheinen wird das Sicherheitsmerkmal durch UV-Licht (reversibel) sichtbar. Ebenso werden Kombinationen mit Druck- und Temperaturempfindlichen Schichten zur Sicherheitsmarkierung beschrieben.

Aus der WO 01/15903 A1 ist die Applikation von permanenten Wasserzeichen mittels Tintenstrahldruck bekannt. Neben maschinenseitigen Ausführungen werden auch verschiedene Rezepturen für Wasserzeichentinten genannt, darunter Lösungsmitteltinten, Öl-basierende Tinten und Tinten auf Basis von (Meth)acrylaten.

Aus der US 4,784,876 ist die Markierung von Gegenständen mit einem nickelhaltigem Fluid bekannt, welches für das menschliche Auge unsichtbar ist. Erst durch die Einwirkung einer Entwicklerflüssigkeit (z.B. mit Dimethylglyoxim) kommt es zu einer irreversiblen Farbreaktion aufgrund von Salzkomplexierung. Dadurch wird das ursprünglich latente Bild permanent sichtbar gemacht.

Die DE 697 18 329 T2 beschreibt eine Kombination aus verschiedenen Sicherheitsmerkmalen für die Sicherung von Schecks, Geldscheinen, Wertpapieren, usw. In diesem Zusammenhang werden auch latente Informationen diskutiert, die (i) über ein Prägen des Papieres, (ii) die Einarbeitung von Magnetstreifen und (iii) die Applikation von unsichtbaren Tinten eingebracht werden sollen. Letztere sollen zum Auslesen mit einem speziellen Stoff (z.B. Bleichmittel) reagieren und so permanent sichtbar gemacht werden.

Die WO 98/15414 beschreibt eine Tinte, welche mittels Tintenstrahldruck verdruckbar und für das menschliche Auge unsichtbar ist. Das latente Bild wird durch die Einwirkung eines "Textmarkers" (Entwickler) sichtbar gemacht, wodurch eine chemische Farbreaktion gestartet wird. Konzeptionell ist dieser Ansatz sehr ähnlich zu US 4,784,876 A.

Die DE 102 53 183 A1 beschreibt eine Tinte, welche z.B. mittels Tintenstrahldruck verdruckbar und für das menschliche Auge unsichtbar ist. Das latente Bild wird durch die Einwirkung eines Entwicklers auf den Leukofarbstoff sichtbar gemacht, wodurch eine chemische Farbreaktion gestartet wird. Konzeptionell ist dieser Ansatz sehr ähnlich zu US 4,784,876 und WO 98/15414.

Die DE 100 20 873 A1 beschreibt Druckfarben mit temporär wirkendem, authentizitätsnachweisendem Sicherheitsmerkmal, wobei das Sicherheitsmerkmal eine, mit einem Entwicklerreagenz unter Farbbildung chemisch reagierende Substanz ist, wobei die Substanz aus mindestens einem substituierten Phthalid besteht und wobei das Entwicklerreagenz alkalisch eingestellt ist und mindestens ein flüchtiges Lösungsmittel enthält. In einem ersten Schritt wird die Entwicklersubstanz auf das Sicherheitsmerkmal gegeben, wobei es zu einer Säure-Base Farbreaktion kommt. Der pH-Wert einer aus einer wässrigen oder ethanolischen NaOH bestehenden Entwicklersubstanz wird dabei mindestens so hoch eingestellt wie der Minimalwert des die entsprechenden Farbreaktion ermöglichenden pH-Bereichs. Die Reversibilität der Farbreaktion wird laut Druckschrift erreicht, indem in einem zweiten Schritt durch Verdunstung des Lösungsmittels auch die Farbe verschwindet.

Die zur Überprüfung bzw. zur Sichtbarmachung einer Vielzahl der gängigen herkömmlichen authentizitätsnachweisenden Sicherheitsmerkmale zugrundeliegenden Methoden beruhen auf chemisch irreversiblen oder reversiblen Reaktionen, bei denen ein Substrat mit einer geeigneten Entwicklersubstanz unter Farbbildung bzw. Farbänderung reagiert, was sich in einer relativ komplexen Authentizitäts-Nachweismethodik widerspiegelt.

Aufgrund der Tatsache, dass bei solchen Sicherheitsmerkmalen das Substrat zwingend auf die Entwicklersubstanz chemisch abgestimmt werden muss, um den Nachweis eines Sicherheitsmerkmals erbringen zu können, ist eine derartige Authentizitäts-Nachweismethodik wenig flexibel.

Die WO 2008/110317 A1 beschreibt eine polymerisierbare Mischung für den Tintenstrahldruck umfassend Flüssigkristalle (LCP) mit den folgenden Komponenten: a) 50-80wt% monofunktionelle LCP, b) 10-50wt% höher funktionelle LCP, c) 0.01-5wt% Initiatoren, d) 0.01-5wt% Inhibitoren, e) 0-20wt% Additive, mit der Maßgabe, dass die Gesamtmenge der Komponenten 100 Gew% beträgt. Es sollen damit Lösungsmittel beim Tintenstrahldruck von LCPs eliminiert werden. Die Mischung wird zur Herstellung eines latenten Sicherheitsmerkmals verwendet, wobei unterschiedlichste Methoden, insbesondere Farbstoffe, für diesen Zweck beschrieben werden.

Aus der WO 2004/087430 A1 ist ein Verfahren zum Authentifizieren eines Polymerfilms bekannt. Dazu enthält der Polymerfilm ein farbloses Additiv, das mit einer anderen Komponente, die beispielsweise mit einem Stift aufgebracht wird, reagiert, wodurch das Sicherheitsmerkmal durch eine sichtbare Farbänderung sichtbar wird. Einsetzbare Komponenten sind z.B. farblose Benzol-Diammoniumsalze und Aniline, die zu Azo-Farbstoffen reagieren, Polyethylenimin, das rote Eosinflecken auf dem Film fixiert (die farblose Komponente auf der Folienoberfläche wird durch Waschbeschichten aufgetragen), Teilchen, die die Filmeigenschaften auf der Oberfläche modifizieren (beispielsweise Siliziumdioxid-Teilchen können mit pH-empfindlichen Farbstoffen, wie Kristallviolett-Lacton, versehen werden), durchdringenden Tinten, die eine modifizierte Nichtoberflächenschicht durchdringen (z.B. mit Nano-Ton) und/oder eine eingekapselte Komponente, die freigesetzt wird, wenn Druck auf die Folie ausgeübt wird, um mit anderen Komponenten (beispielsweise in der Folie verpackt) zur Ausbildung der Farbänderung zu reagieren. Derartige Folien können beispielsweise in Wertdokumenten und/oder Verpackungen (beispielsweise Umhüllung für Tabakprodukte) verwendet werden.

Der Nachfrage des Marktes an individuellen Wasserzeichen mit entsprechend großer Fälschungssicherheit folgend, ist es die Aufgabe der Erfindung eine Möglichkeit zur Realisierung von "latenten Sicherheitsmerkmalen" bzw. von "latenten Wasserzeichen" zu schaffen.

Die Erfindung hat den Vorteil, den Nachweis für ein temporär wirkendes, authentizitätsnachweisendes Sicherheitsmerkmal entsprechend einer vereinfachten Nachweismethodik zu erbringen. Dies wird erreicht indem ein Substrat mit mindestens einer saugfähigen Oberfläche mit erstem und zweiten Bereich bereitgestellt wird, wobei der erste Bereich und der zweite Bereich gemäß den Schritten (b) und (c) des Anspruchs 1 bedruckt wird und die Bereiche, falls notwendig, gemäß Schritt (d) behandelt werden, wodurch sich das erste Druckschema vom zweiten Druckschema derart unterscheidet, dass in einem Schritt (e) bei Aufbringung einer Flüssigkeit auf den ersten und zweiten Bereich auch ohne chemische Reaktion sich der erste Bereich optisch vom zweiten Bereich unterscheidet, wobei die unterschiedlichen optischen Eindrücke bzw. Eigenschaften auf die unterschiedlichen in den Bereichen sich ausbildenden Transluszenzen und/oder Reflexionen zurückzuführen sind, sodass das latente Sicherheitsmerkmal optisch für das Auge zum Vorschein kommt.

Es sei in diesem Zusammenhang darauf hingewiesen, dass der Begriff "chemische Reaktion" entsprechend dem technischen Sprachgebrauch auszulegen ist, sodass damit also gemeint ist, dass keine Anlagerung an das oder Umwandlung von Molekülen des Sicherheitsmerkmal(s) oder anderwärtige chemische Beeinflussungen oder Veränderungen des Sicherheitsmerkmals erfolgen.

Von Vorteil ist die erfinderische Authentizitäts-Nachweismethodik gegenüber herkömmlichen Nachweismethodiken, da die Auswahl der Behandlungsflüssigkeiten mit denen man das erfinderische Sicherheitsmerkmal optisch zum Vorschein bringen kann, grundsätzlich viel größer ist als die Auswahl an Behandlungsflüssigkeiten mit denen man herkömmliche Sicherheitsmerkmale durch eine chemisch unter Farbbildung bzw. Farbänderung stattfindenden Reaktion zum Vorschein bringen kann.

Das erfinderische Verfahren zur Erhöhung der Fälschungssicherheit eines Gegenstandes mit einem latenten Sicherheitsmerkmal beinhaltet mehrere Schritte, wobei in einem ersten Schritt (a) ein Substrat mit mindestens einer saugfähigen Oberfläche mit erstem und zweitem Bereich bereitgestellt wird, in einem zweiten Schritt (b) der erste Bereich der mindestens einen saugfähigen Oberfläche mit Tinte gemäß eines ersten Druckschemas bedruckt wird und in einem dritten Schritt (c) der zweite Bereich gemäß eines zweiten Druckschemas bedruckt wird. In einem vierten Schritt (d) erfolgt falls notwendig eine Behandlung der gemäß den Schritten (b) und/oder (c) bedruckten oder nicht veränderten Bereiche dergestalt, dass nach der Behandlung der erste Bereich sich vom zweiten Bereich optisch nicht unterscheidet, sodass das Sicherheitsmerkmal für das Auge nicht zum Vorschein kommt, wobei Tintentropfen der Tinte auf dem saugfähigem Substrat bevorzugt beabstandet zueinander vorliegen und sich erstes und zweites Druckschema derart unterscheiden, dass in einem fünften Schritt (e) bei Aufbringung einer Flüssigkeit auf den ersten und zweiten Bereich sich der erste Bereich optisch vom zweiten Bereich unterscheidet, sodass das Sicherheitsmerkmal für das Auge zum Vorschein kommt und mit zunehmender Abdampfung der Flüssigkeit die optischen Unterschiede zunehmend kleiner werden bis die beiden Bereiche optisch voneinander sich nicht mehr unterscheiden, sodass das latente Sicherheitsmerkmal wieder unsichtbar wird.

Das Sicherheitsmerkmal kommt im fünften Schritt (e) zum Vorschein, da der erste Bereich sich optisch vom zweiten Bereich unterscheidet, wobei die unterschiedlichen optischen Eindrücke auf die unterschiedlichen Transluszenzen und/oder Reflexionen zurückzuführen sind, welche sich in den genannten Bereichen ausbilden. Die unterschiedlichen optischen Eindrücke bzw. die unterschiedlichen Transluszenzen und/oder Reflexionen entstehen weil die Lichtstrahlen im ersten und zweiten Bereich nach Aufbringung einer Flüssigkeit in den genannten Bereichen zum Beispiel unterschiedlich gebrochen, gebeugt, absorbiert und/oder reflektiert werden.

Das erste und zweite Druckschema werden gemäß unterschiedlicher Rasterdichten und/oder Tintentropfengrößen dergestalt bedruckt, dass an einem Übergang vom ersten zum zweiten Bereich die Rasterdichte und/oder die Tintentropfengröße kontinuierlich und/oder stufenweise oder abrupt ansteigt bzw. abfällt, wobei der Unterschied zwischen größter und kleinster Rasterdichte und/oder der zwischen größter und kleinster Tintentropfengröße im ersten und zweiten Bereich einen für das menschliche Auge wahrnehmbaren Rasterdichten-Grenzwert und/oder Tintentropfengrößen-Grenzwert überschreitet, wobei der Rasterdichten-Grenzwert auf den Unterschied zwischen größter und kleinster Rasterdichte und Tintentropfengrößen-Grenzwert auf den Unterschied zwischen größter und kleinster Tintentropfengröße bezogen ist.

Mit "Unterschied zwischen größter und kleinster Rasterdichte" ist der Quotient zwischen größter und kleinster Rasterdichte gemeint und mit "Unterschied zwischen größter und kleinster Tintentropfengröße" ist der Quotient zwischen größter und kleinster Tintentropfengröße gemeint.

Die Grenzwerte, Rasterdichten-Grenzwert und Tintentropfengrößen-Grenzwert, sind im Kontext so zu verstehen, dass der erste auf den Unterschied zwischen größter und kleinster Rasterdichte und dass der zweite auf den Unterschied zwischen größter und kleinster Tintentropfengröße bezogen ist.

Wird keiner der beiden Grenzwerte, Rasterdichten-Grenzwert und/oder Tintentropfengrößen-Grenzwert, zahlenmäßig überschritten, sodass der Unterschied zwischen größter und kleinster Rasterdichte und/oder der Unterschied zwischen größter und kleinster Tropfengröße im ersten und zweiten Bereich zahlenmäßig den entsprechenden Grenzwert nicht überschreitet, spricht man im Kontext von einem einzigen Druckschema.

Der Begriff "Tropfengröße" ist als Synonym für "Tintentropfengröße" im Kontext zu verstehen.

Ein einziges Druckschema ist im Kontext in Folge so definiert, dass das Druckschema zwar gemäß unterschiedlicher Rasterdichten und/oder Tropfengrößen auf einen einzigen Bereich bedruckt werden kann, aber an keinem Übergang innerhalb des Bereichs der Unterschied zwischen größter und kleinster Rasterdichte einen Rasterdichten-Grenzwert und/oder der Unterschied zwischen größter und kleinster Tropfengröße einen Tintentropfengrößen-Grenzwert überschreitet, wobei auch bei Aufbringung einer Flüssigkeit auf den Bereich zwischen den unterschiedlichen Rasterdichten und/oder Tintentropfengrößen sich keine für das menschliche Auge auflösbaren optischen Unterschiede ausbilden, sodass das Sicherheitsmerkmal nicht zum Vorschein kommt.

Ein Fachmann kann in einfacher Weise beispielsweise anhand weniger Versuche den Rasterdichten-Grenzwert und/oder Tintentropfengrößen-Grenzwert für die Parameter Rasterdichte und/oder Tintentropfengröße festlegen, damit nicht versehentlich ein Sicherheitsmerkmal hergestellt wird, welches den Anforderungen des Sichtbarwerdens nicht entspricht.

In der vorliegenden Beschreibung wird häufig auf den sogenannte Tropfen/Tropfen Abstand Bezug genommen. Damit kann jedoch nicht der Abstand der Mittelpunkte zweier benachbarter Tropfen gemeint sein, insbesondere weil die auf dem Substrat realisierte Tropfenform häufig gerade keine kreisförmige ist. Vorliegend ist mit Tropfen/Tropfen Abstand vielmehr der Abstand der theoretischen, durch die Recheneinheit des Druckers vorgegebenen punktförmigen Positionen gemeint.

Es gibt verschiedene Möglichkeiten wie ein Fachmann den Tintentropfengrößen-Grenzwert und/oder den Rasterdichten-Grenzwert für die Parameter, Tropfengröße (Parameter 1) und/oder Rasterdichte (Parameter 2) für verschiedene Substrate und/oder Tinten bestimmen kann. Die Grenzwerte müssen jeweils für ein bestimmtes Substrat in Abhängigkeit einer spezifischen Tinte bestimmt werden, da die Parameter von der Substratart und Tintenart abhängig sind und somit unterschiedlich sein können. Beispielsweise kann ein Fachmann in einer ersten Testreihe Druckdurchgänge mit konstanter Tropfengröße, aber jeweils unterschiedlicher Rasterdichte (bzw. Tropfen/Tropfen Abstand) für die beiden Bereiche durchführen und somit überprüfen bis zu welcher Rasterdichte der Rasterdichten-Grenzwert nicht unterschritten wird. In einer zweiten Testreihe kann er Druckdurchgänge mit konstanter Rasterdichte, aber jeweils unterschiedlicher Tropfengröße für die beiden Bereiche durchführen und somit überprüfen bis zu welcher Tropfengröße der Tintentropfengrößen-Grenzwert nicht unterschritten wird. Die aus den beiden Testreihen erhaltenen Ergebnisse zu den jeweiligen Grenzwerten können in ein 2-D Diagramm eingetragen werden und haben somit Gültigkeit für ein bestimmtes Substrat in Abhängigkeit einer bestimmten Tinte.

In einer bevorzugten Ausgestaltung des erfinderischen Verfahrens wird das erste und zweite Druckschema gemäß unterschiedlicher Rasterdichten und/oder Tintentropfengrößen dergestalt bedruckt, dass an einem Übergang vom ersten zum zweiten Bereich die Rasterdichte und/oder die Tintentropfengröße monoton und bevorzugt streng monoton ansteigt bzw. abfällt, wobei der Unterschied zwischen größter und kleinster Rasterdichte und/oder der Unterschied zwischen größter und kleinster Tintentropfengröße im ersten und zweiten Bereich einen Rasterdichten-Grenzwert und/oder Tintentropfengrößen-Grenzwert überschreitet.

In einer weiteren bevorzugten Ausgestaltung der Erfindung wird der erste und/oder zweite Bereich der mindestens einen saugfähigen Oberfläche des Substrats einseitig und/oder beidseitig gemäß den Schritten (b) und (c) bedruckt. Es besteht also die Möglichkeit, dass beispielsweise der erste Bereich nur auf einer Seite des Substrats bedruckt ist und der zweite Bereich auf beiden Seiten, oder umgekehrt. Ebenso können der erste und der zweite Bereich einseitig oder zweiseitig bedruckt sein.

In einer bevorzugten Ausgestaltung der Erfindung wird der erste Bereich und optional der zweite Bereich gemäß eines farbigen weiteren, dritten Druckmusters, welches nicht das Sicherheitsmerkmal bildet, dergestalt bedruckt, indem Tintentropfen einer farbigen Tinte auf dem saugfähigen Substrat bevorzugt beabstandet zueinander und bevorzugt beabstandet zu den Tintentropfen des ersten und/oder des zweiten Druckschemas aufgebracht werden, wobei das farbige Druckmuster im trockenen und feuchten Zustand für das Auge zum Vorschein kommt. Das Druckmuster kann z.B. eine farbige Schrift oder ein farbiges Bild darstellen. Insbesondere kann damit erreicht werden, dass das gemäß dem Schritt (b) und Schritt (c) gedruckte Sicherheitsmerkmal nach Aufbringung der Flüssigkeit "hinter" dem farbigen Druckschema zu Vorschein kommt.

Der Begriff "farbig" ist im Kontext so zu verstehen, dass das Druckmuster eine oder mehrere Farben aus der Gruppe enthält, die durch die Grundfarben (rot, blau, gelb), deren Mischfarben sowie auch, weiß, schwarz und individuelle Farben gebildet wird.

Die Behandlung der Tinte erfolgt in einer bevorzugten Ausführungsform der Erfindung mit einer Behandlungsmethode, insbesondere durch Bestrahlung und/oder durch Erwärmung und/oder durch chemische Reaktion und/oder durch zeitliches Abwarten, wobei eine zumindest teilweise Polymerisation und/oder eine zumindest teilweise Trocknung der Tinte bzw. vom Sicherheitsmerkmal eintritt.

Die Durchführung der Schritte (b) und/oder (c) und/oder (d) kann in einer bevorzugten Ausführungsform der vorliegenden Erfindung zeitlich getrennt und/oder zeitgleich erfolgen und Schritt (d) gegebenenfalls zwischen den Schritten (b) und (c) und/oder als letzter Schritt durchgeführt werden.

Bei dem Verfahren zur Herstellung eines latenten Sicherheitsmerkmals wird bevorzugt darauf geachtet, dass die saugfähige Oberfläche nicht dermaßen bedruckt wird, dass die Tintentropfendichte zu hoch bzw. der Tropfen/Tropfen Abstand zu klein gewählt ist und/oder die Tintentropfen auf dem Substrat zueinander nicht beabstandet vorliegen, da sonst das Sicherheitsmerkmal im trockenen Zustand unerwünscht permanent für das Auge sichtbar werden bzw. sein könnte.

Wird allerdings ein Sicherheitsmerkmal auf eine saugfähige Oberfläche dermaßen bedruckt, dass die Tintentropfendichte zu niedrig bzw. der Tropfen/Tropfen Abstand zu groß gewählt wird, könnte es dazu kommen, dass das Sicherheitsmerkmal in einem Schritt (e) bei Aufbringung einer Flüssigkeit nicht sichbar wird.

In einer bevorzugten Ausführungsform der Erfindung wird daher der Tropfen/Tropfen Abstand bevorzugt in einem Bereich mit einer unteren Grenze von 5 µm und einer oberen Grenze von 150 µm, insbesondere aus einem Bereich mit einer unteren Grenze von 15 µm und einer oberen Grenze von 100 µm gewählt, wobei die Tintentropfen bevorzugt einen Tropfenvolumen von 1 pl bis 30 pl aufweisen. Wird in dieser Ausführungsform die obere Grenze des Tropfen/Tropfen Abstandes von bevorzugt 150 µm überschritten, könnte es sein, dass das Sicherheitsmerkmal in einem Schritt (e) nicht sichtbar wird.

Tintentropfen mit einem Volumen von 10 pl besitzen je nach Substratart eine Tropfengröße zwischen ca. 20 µm bis 30 µm, wobei die Tropfengröße maßgeblich von der Saugfähigkeit des Substrats und vom Benetzungsvermögen der Tinte auf dem Substrat abhängt.

Würde in einer Ausführungsform in einem Testbeispiel ein erster Bereich eines saugfähigen Substrats in einem Schritt (b) gemäß einem ersten Druckschema mit Tintentropfen mit einem Tropfen/Tropfen Abstand größer als 150 µm bedruckt, wobei in einem Schritt (c) ein zweiter Bereich gemäß eines zweiten Druckschemas unverändert belassen werden würde, würde das Sicherheitsmerkmal im Schritt (e) bei Aufbringung einer Flüssigkeit auf beide Bereiche nicht zum Vorschein kommen, da der Tropfen/Tropfen Abstand zu groß gewählt wurde.

In einer bevorzugten Ausführungsform der Erfindung erfolgt die Aufbringung einer Flüssigkeit einseitig und/oder beidseitig auf den ersten und/oder zweiten Bereich der mindestens einen saugfähigen Oberfläche.

Im vorliegenden Verfahren wird in einem mit einer Tinte bedruckten Bereich die Affinität der bedruckten Oberfläche zu einer Flüssigkeit gegenüber einem nicht bedruckten Bereich verändert, sodass durch das Aufbringen der Flüssigkeit auf die mit der bevorzugt farblosen Tinte bedruckten Oberfläche das Sicherheitsmerkmal sichtbar wird und nach dem Abdampfen des Lösungsmittels das Sicherheitsmerkmal wieder unsichtbar wird. Die zum Bedrucken der saugfähigen Oberfläche eingesetzte Tinte enthält vorzugsweise zumindest ein (Meth)acrylat in einem Anteil zwischen 50 Gew.-% und 99 Gew.-%, das vorzugsweise zumindest eine funktionelle Gruppe aufweist, die ausgewählt ist aus einer Gruppe umfassend oder bestehend aus Glykolgruppen, Hydroxygruppen, Aminogruppen, Thiolgruppen, Carboxygruppen, Silylgruppen, Furfurylgruppen, Alkylgruppen und Fluoroalkylgruppen, wobei die Tinte bevorzugt farblos ist und das zumindest eine (Meth)acrylat in der ausgehärteten Form einen polaren Anteil der Oberflächenenergie zwischen 35 % und 70 % oder zwischen 5 % und 30 % aufweist (Methode nach Owens-Wendt-Rabel-Kaelble).

Von Vorteil ist dabei, dass derartige latente Wasserzeichen auf jedes saugfähige Material/ jeden saugfähigen Gegenstand (insbesondere Papier, Leder, Textilien, usw.) mit hinreichender Affinität zu einer Flüssigkeit wie beispielsweise Wasser aufgedruckt werden können, für das menschliche Auge unsichtbar sind und erst in einem Schritt (e) die Einwirkung einer Flüssigkeit, beispielsweise Wasser (Betupfen o.ä.), zum reversiblen Erscheinen des latenten Wasserzeichens führt, wodurch eine erhöhte Fälschungssicherheit dieser Sicherheitsmerkmale erhalten wird. Zudem kann das Sicherheitsmerkmal einfach individualisiert werden, sodass auch Kleinserien, bis zu einem Stück, realisiert werden können. Im Vergleich zu den voranstehend beschriebenen Konzepten, denen gemein ist, dass die gedruckten Wasserzeichen permanent sichtbar sind und eine vergleichsweise niedrige Fälschungssicherheit vorliegt, kann mit der Erfindung eine höhere Fälschungssicherheit erreicht werden.

Weiter wird durch diese Tinte die Haptik oder das Erscheinungsbild der markierten Substrate nicht negativ beeinflusst. Beispielsweise wird im Stand der Technik ein "fettiger" Eindruck erzeugt.

Die Erfindung hebt sich insbesondere von den bisherigen auf chemische Nachweismethoden beruhenden Konzepten aus dem Stand der Technik vor allem durch ihren latenten Charakter ab. Das mittels Tintenstrahldruck auf saugfähige Medien applizierte latente Wasserzeichen ist für das Auge unsichtbar und wird erst durch die Einwirkung von einer Flüssigkeit wie z.B. Wasser (z.B. Betupfen) sichtbar gemacht. Dadurch kann das Wasserzeichen beispielsweise an beliebigen oder variablen Stellen eines Dokumentes, Etiketts usw. aufgebracht werden, ohne dem Anwender Einschränkungen in der graphischen Gestaltung aufzuerlegen oder die Haptik des markierten Substrates negativ zu beeinflussen. Ebenso trägt der latente Charakter des Wasserzeichens positiv zur Fälschungssicherheit des markierten Substrates bei, zumal dem Anwender ein einfach auszulesendes und reversibles Sicherheitsmerkmal bereitgestellt wird.

Nach einer bevorzugten Ausführungsvariante des Verfahrens ist vorgesehen, dass als Flüssigkeit bzw. Lösungsmittel zur Sichtbarmachung des Sicherheitsmerkmals eine polare Flüssigkeit verwendet wird, wobei nach einer weiteren Ausführungsvariante die polare Flüssigkeit bevorzugt ein Lösungsmittel ist und ausgewählt ist aus einer Gruppe umfassend oder bestehend aus Wasser, Alkohole, (z.B. Ethanol oder Isopropanol), Ether (z.B. Diethylether), Ketone (z.B. Aceton oder Butanon), Ester (z.B. Essigester) oder halogenierte Kohlenwasserstoffe (z.B. Dichlormethan). Es wird durch die Tinte eine Veränderung der Benetzbarkeit der bedruckten Oberfläche erreicht, wodurch das Sicherheitsmerkmal (Wasserzeichen) sichtbar wird.

Vorzugsweise wird als Tinte eine Tinte auf Basis zumindest eines (Meth)acrylats verwendet, da diese Substanzen einerseits problemlos im Handel erhältlich sind, und andererseits aus diesem Grund in heutigen Tintenformulierungen bereits breit eingesetzt werden, sodass die Tinte nach der Erfindung in herkömmlichen Tintenstrahldruckern problemlos verarbeitet werden kann.

Nach einer Ausführungsvariante des Verfahrens ist vorgesehen, dass diese zumindest ein Tensid enthält, das nicht kovalent in ein aus dem zumindest einen (Meth)acrylat gebildeten Tintennetzwerk eingebaut wird. Es kann damit das Benetzungsverhalten des Sicherheitsmerkmals beeinflusst werden.

Weiter kann vorgesehen sein, dass die Tinte eine Polarität der Oberflächenenergie (Methode nach Owens-Wendt-Rabel-Kaelble) zwischen 1 % und 55% aufweist, womit einerseits deren Druckverhalten und andererseits die Langlebigkeit des Sicherheitsmerkmals positiv beeinflusst werden können.

Der erfinderische fälschungssichere Gegenstand beinhaltet ein Substrat mit mindestens einer saugfähigen Oberfläche mit erstem und zweitem Bereich, auf welcher zumindest einen Oberfläche der erste Bereich gemäß eines ersten Druckschemas und der zweite Bereich gemäß eines zweiten Druckschemas mit Tinte in Form von Tintentropfen bedruckt ist und falls nötig gemäß einer Behandlungsmethode behandelt ist, der erste Bereich sich vom zweiten Bereich optisch nicht unterscheidet, sodass das im vorzugsweise gleichzeitig trockenen Zustand des ersten und zweiten Bereichs das Sicherheitsmerkmal für das menschliche Auge nicht sichtbar ist, wobei sich erstes und zweites Druckschema derart unterscheiden, dass in einem zumindest teilweise gleichzeitig feuchten Zustand des ersten und zweiten Bereichs sich der erste Bereich ohne chemische Reaktion optisch vom zweiten Bereich unterscheidet, sodass das latente Sicherheitsmerkmal für das Auge sichtbar ist.

Das erste und zweite Druckschema weisen derart unterschiedliche Rasterdichten und/oder Tintentropfengrößen auf, dass die Rasterdichte und/oder die Tintentropfengröße an einem Übergang vom ersten zum zweiten Bereich kontinuierlich und/oder stufenweise oder abrupt ansteigt bzw. abfällt, wobei der Unterschied zwischen größter und kleinster Rasterdichte und/oder der Unterschied zwischen größter und kleinster Tintentropfengröße im ersten und zweiten Bereich einen Rasterdichten-Grenzwert und/oder Tintentropfengrößen-Grenzwert überschreitet, wobei der Rasterdichten-Grenzwert auf den Unterschied zwischen größter und kleinster Rasterdichte und Tintentropfengrößen-Grenzwert auf den Unterschied zwischen größter und kleinster Tintentropfengröße bezogen ist.

In einer anderen bevorzugten Ausgestaltung des erfinderischen Gegenstandes weisen das erste und zweite Druckschema derart unterschiedliche Rasterdichten und/oder Tintentropfengrößen auf, dass die Rasterdichte und/oder die Tintentropfengröße an einem Übergang vom ersten zum zweiten Bereich monoton und bevorzugt streng monoton ansteigt bzw. abfällt, wobei der Unterschied zwischen größter und kleinster Rasterdichte und/oder der Unterschied zwischen größter und kleinster Tintentropfengröße im ersten und zweiten Bereich einen Rasterdichten-Grenzwert und/oder Tintentropfengrößen-Grenzwert überschreitet.

In einer weiteren bevorzugten Ausführungsform der Erfindung ist der erste und/oder der zweite Bereich der mindestens einen saugfähigen Oberfläche des Substrats einseitig und/oder beidseitig gemäß den Schritten (b) und (c) nach Anspruch 1 bedruckt.

In einer bevorzugten Ausgestaltung der Erfindung ist der erste Bereich und optional der zweite Bereich zusätzlich gemäß eines farbigen Druckmusters, welches nicht das Sicherheitsmerkmal bildet, dergestalt bedruckt, indem Tintentropfen einer farbigen Tinte auf dem saugfähigen Substrat bevorzugt beabstandet zueinander und bevorzugt beabstandet zu den Tintentropfen des ersten und/oder des zweiten Druckschemas aufgebracht sind, wobei das farbige Druckmuster im trockenen und feuchten Zustand für das Auge sichtbar ist. Das Druckmuster kann z.B. eine farbige Schrift oder ein farbiges Bild darstellen.

Der Tropfen/Tropfen Abstand liegt gemäß einer bevorzugten Ausführungsvariante des erfinderischen Gegenstandes bevorzugt in einem Bereich zwischen 5 µm bis 150 µm und bevorzugter in einem Bereich zwischen 15 µm bis 100 µm, wobei die Tintentropfen bevorzugt einen Tropfenvolumen von 1 pl bis 30 pl aufweisen.

Nach einer Ausführungsvariante des Gegenstandes ist vorgesehen, dass der mit dem Sicherheitsmerkmal bedruckte Bereich der saugfähigen Oberfläche eine veränderte Saugfähigkeit für das Lösungsmittel aufweist. Zur Quantifizierung der Änderung der Saugfähigkeit für das Lösungsmittel kann die Polarität der Oberflächenenergie von gehärteten Tintenschichten herangezogen werden. Letztere kann mittels Kontaktwinkelmessung von geeigneten Testsubstanzen (z.B. Wasser und Diiodmethan) auf gehärteten Tintenschichten bestimmt werden (nach Owens-Wendt-Rabel- Kaelble; diese Methode ist in einschlägiger Fachliteratur hinreichend beschrieben). Es wird damit die Sichtbarmachung des Sicherheitsmerkmals unterstützt, insbesondere dessen Konturenschärfe, sodass also "verwaschene" Eindrücke des Sicherheitsmerkmals vermieden werden können.

Zum besseren Verständnis der Erfindung wird diese anhand der nachstehenden Beschreibung und Figuren näher erläutert.

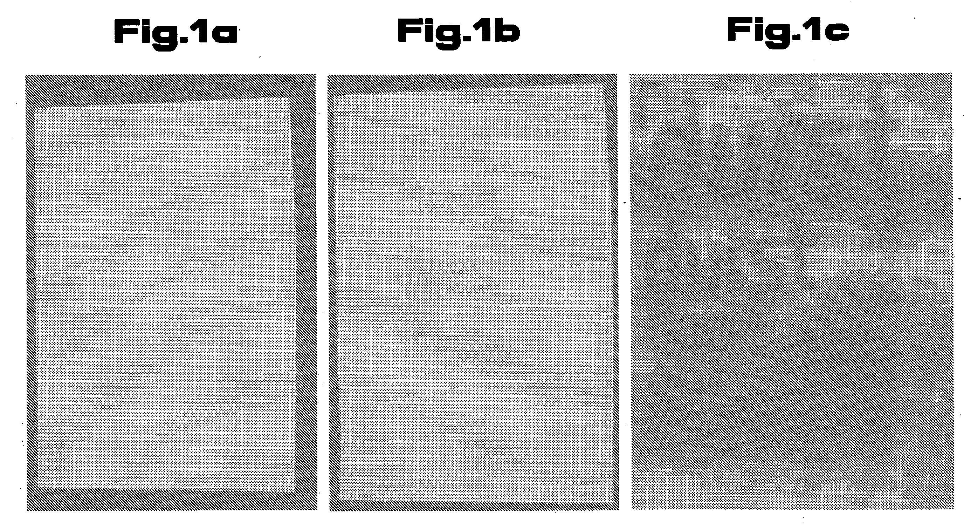

Figur 1a zeigt eine Fotographie eines mit einem erfindungsgemäß bedruckten Papiers im trockenen Zustand.

Figur 1b zeigt das Papier der Figur 1a nach Betupfen mit einem in Wasser getränkten Tuchs.

Figur 1c zeigt die Schrift aus Figur lb in Großaufnahme

Einführend sei festgehalten, dass unter einem Gegenstand im Sinne der Erfindung ein mit einer Tintenstrahltinte bedruckbarer Gegenstand verstanden wird, der eine saugfähige Oberfläche aufweist, also beispielsweise ein Papier, ein Leder, ein Textil, etc.

Des Weiteren ist im Sinne der Erfindung ein latentes Wasserzeichen, das ohne chemische Reaktion durch Benetzung des Gegenstandes mit einem Lösungsmittel von seinem für das menschliche Auge unsichtbaren Zustand in den sichtbaren Zustand wechselt, wobei dieser Vorgang durch das Abdampfen wieder umgekehrt wird, sodass dieser Vorgang also reversibel ist.

Wenn in der Beschreibung ein erster und ein zweiter Bereich angesprochen ist, ist damit gemeint, dass die beiden Bereiche unmittelbar nebeneinanderliegend oder beabstandet zueinander auf dem jeweiligen Gegenstand ausgebildet bzw. angeordnet sein können.

Die vorliegende Erfindung beschreibt ein Tintensystem zur Herstellung von "latenten Wasserzeichen" mittels Tintenstrahldruck. Die UV-härtbaren Tinten sind auf Basis von zumindest einem Acrylat und/oder zumindest einem Methacrylat (im Folgenden als (Meth)acrylat bezeichnet) bzw. von Mischungen aus mehreren (Meth)acrylaten formuliert und können auf jegliches saugfähige Material mit hinreichender Wasseraffinität (Papier, Textilien, Leder usw.) appliziert werden. Dort liegen sie nach dem Druck für das menschliche Auge unsichtbar vor, wobei erst die Einwirkung von einem Lösungsmittel, wie z.B. Wasser, zum reversiblen Erscheinen des Sicherheitsmerkmals (Wasserzeichens) führt. Das reversible Erscheinen des Wasserzeichens hebt die vorliegende Erfindung von den bisher beschriebenen Konzepten für gedruckte Wasserzeichen ab und führt zu einer erhöhten Fälschungssicherheit der markierten Substrate.

Bei den im Inkjet-Druck eingesetzten Tinten handelt es sich gewöhnlich um UV-, thermisch oder mittels Elektronenstrahlen härtbare Tintenmischungen, die zumindest aus Trägerflüssigkeiten, Tensiden, Bindemitteln und ggf. Initiatoren aufgebaut sind. Im Falle von farbigen Tintenstrahltinten sind zudem Farbstoffe und/oder Pigmente enthalten.

Als vernetzbare, d.h. mittels energiereicher Strahlung härtbare Tintenbestandteile, haben sich im Inkjet-Bereich insbesondere (Meth)acrylate etabliert, da diese kommerziell und im industriellen Maßstab verfügbar sind sowie vollständig charakterisiert vorliegen. Durch die Vielzahl an zur Verfügung stehenden (Meth)acrylaten ist es möglich, zum Beispiel über eine gezielte Mischung von Tinteninhaltsstoffen die Haftungseigenschaften auf unterschiedlichen Substraten zu steuern, die Beständigkeit gegenüber Abrasion und Lösungsmitteln zu kontrollieren oder die Flexibilität von gehärteten Tintenschichten zu beeinflussen. Durch den Einsatz von funktionalisierten Acrylaten und Methacrylaten (z.B. glykol-, hydroxy-, amino- oder thiolfunktionalisiert vs. aliphatisch funktionalisiert) können gezielt weitere Tinteneigenschaften modifiziert werden, darunter die Polarität der Tintenstrahltinten bzw. die Polarität der daraus erhaltenen Tintenschichten.

Zudem weisen (Meth)acrylate unter Zusatz von geeigneten Initiatorsystemen (z.B. UV-Initiatoren oder thermische Initiatoren) eine schnelle Aushärtung auf, womit die weite Verbreitung dieser Monomere erklärt werden kann (z.B. in Large-Format- Inkjet-Druckern, Zahnersatzmaterialien, Lacksystemen, usw.). Bezüglich der zur Tintenformulierung eingesetzten (Meth)acrylate und Initiatorsysteme sei auf den jeweiligen Stand der Technik verwiesen.

Die Herstellung von Tinten für Inkjet-Anwendungen erfolgt üblicherweise in mehrstufigen bzw. voneinander getrennten Prozessschritten. Die angewandten Formulierungsprozeduren bzw. die dabei eingesetzten Geräte entsprechen dem jeweiligen Stand der Technik. Um an dieser Stelle unnötige Wiederholungen zu vermeiden, sei auf die einschlägige Fachliteratur verwiesen.

Für den Fälschungsschutz von Dokumenten oder den Plagiatsschutz kann als Sicherheitsmerkmal jegliche Art von alphanumerischer oder grafischer Information, wie z.B. gedruckte Barcodes, Bilder, Buchstabenfolgen, Nummernfolgen, DNA-Sequenzen u.v.m. appliziert werden. Es sei hierzu ebenfalls auf die einschlägige Fachliteratur verwiesen. Es können auf einem Gegenstand selbstverständlich auch mehrere, gegebenenfalls unterschiedliche, Sicherheitsmerkmale aufgedruckt werden.

Die Tinte kann dem Stand der Technik entsprechenden mit Piezo-Druckköpfen auf saugfähige Medien wie Papier, Leder, Karton, Textilien, usw. aufgedruckt und mittels energiereicher Strahlung gehärtet werden. Durch die erfindungsgemäßen Tinte bzw. die gezielte Steuerung des Tropfenabstandes und der Druckauflösung werden so für das menschliche Auge unsichtbare Muster appliziert, wobei an den bedruckten Stellen simultan die Saugfähigkeit und die Affinität des Substrates gegenüber Wasser und/oder sonstige Lösungsmittel (z.B. Alkoholen) verändert werden. Die resultierende Modifikation der Substrateigenschaften an den bedruckten Stellen (Saugfähigkeit/Affinität gegenüber Wasser und sonstige Lösungsmittel) führt beim Auftragen eines Lösungsmittels, z.B. beim Betupfen mit Wasser, zum reversiblen Erscheinen des gedruckten Wasserzeichens.

Der vorliegende Ansatz hebt sich somit vom einleitend dargestellten Stand der Technik ab, indem die erzeugten Wasserzeichen latenten Charakter haben und erst durch die Einwirkung von z.B. Feuchte sichtbar werden. Zur Tintenformulierung wird dabei auf kommerzielle (funktionalisierte) (Meth)acrylate zurückgegriffen, welche nach dem Druck die Saugfähigkeit bzw. Wasseraffinität/Lösungsmittelaffinität des Substrates beeinflussen, wobei sowohl polar als auch unpolar funktionalisierte (Meth)acrylate zum Einsatz kommen können. Hier sei auch auf den erfindungsgemäßen Unterschied zu "klassischen" farblosen Tintenstrahltinten ("Varnishes") verwiesen, in welchen die eingesetzten (Meth)acrylate üblicherweise nicht die Substrateigenschaften modifizieren sondern für Haftung, Glanz etc. sorgen.

Die erfindungsgemäße Tinte für latente Wasserzeichen besteht bis zu 99 Gew.-% aus (Meth)acrylaten, wobei auch Mischungen dieser Materialklassen möglich sind.

Die zugehörigen (Meth)acrylate können dabei auch diverse weitere Funktionen übernehmen, wie z.B. die Wirkung als Tensid, Bindemittel, Harz, Viskositätsregler etc.

Weiter kann die Tinte zumindest ein Tensid in einem Anteil von bis zu 25 Gew.-% und/oder zumindest einen Entschäumer in einem Anteil von bis zu 10 Gew.-% und/oder zumindest einen Vernetzungsinitiatoren (UV-Initiator und/oder thermischer Initiator) in einem Anteil von bis zu 20 Gew.-% enthalten. Bevorzugt werden die erfindungsgemäßen Tinten mittels kommerzieller Produkte realisiert, darunter z.B. 2-(4-Benzoyl-3-hydroxyphenoxy)ethylacrylat, 2-(Diethylamino)ethylacrylat, 2-(Dimethylamino)ethylacrylat, 2-[[(Butylamino)carbonyl]oxy]ethylacrylat, 2-Carboxyethylacrylat, oligomeres 2-Carboxyethylacrylat, 2-Chlorethylacrylat, 2-Ethoxyethylacrylat, 2-Ethylhexylacrylat, 2-Hydroxy-3-phenoxypropylacrylat, 2-Hydroxyethylacrylat, 3,5,5-Trimethylhexylacrylat, 3-(Dimethylamino)propylacrylat, 3-(Trimethoxysilyl)propylacrylat, 3-Sulfopropylacrylat als Kaliumsalz, 4-Acryloylmorpholin, 4-Hydroxybutylacrylat, 4-tert-Butylcyclohexylacrylat, Benzyl-2-propylacrylat, Butylacrylat, Di(ethylenglykol)-2-ethylhexyletheracrylat, Di(ethylenglykol)ethyletheracrylat, Dipentaerythritolpenta-/hexa-acrylat, Ethyl-2-(brommethyl)acrylat, Ethyl-2-(trimethylsilylmethyl)acrylat, Ethyl-2-ethylacrylat, Ethyl-2-propylacrylat, Ethylacrylat, Ethyl-cis-(β-cyano)acrylat, Ethylenglykoldicyclopentenyletheracrylat, Ethylenglykolmethyl-etheracrylat, Ethylenglykolphenyletheracrylat, Hexylacrylat, Hydroxypropylacrylat, Isobornylacrylat, Isobutylacrylat, Isodecylacrylat, Isooctylacrylat, Laurylacrylat, Methyl-2-(bromomethyl)acrylat, Methyl-2-acetamidoacrylat, Methyl-3-hydroxy-2-methylenbutyrat, Methyl-α-bromacrylat, Methylacrylat, Neopentylglykolmethyletherpropoxylat, Octadecylacrylat, Pentabrombenzylacrylat, Pentabromphenylacrylat, Poly( ethylenglykol)acrylat, Poly(ethylenglykol)methyletheracrylat, Poly( propylenglykol)acrylat, Poly(propylenglykol)methyletheracrylat, Tetrahydrofurfurylacrylat, [2-(Acryloyloxy)ethyl]trimethylammoniumchlorid, tert-Butyl-2-bromacrylat, tert-Butylacrylat, (Trimethylsilyl)methacrylat, 1,1,1-Trifluor-2-(trifluormethyl)-2-hydroxy-4-methyl-5-pentylmethacrylat, 2,4,6-Tribromphenylmethacrylat, 2-(Methylthio)ethylmethacrylat, 2-(tert-Butylamino)ethylmethacrylat, 2-(Diethylamino)ethylmethacrylat, 2-(Diisopropylamino)ethylmethacrylat, 2-(Dimethylamino)ethylmethacrylat, 2-(Trimethylsilyloxy)ethylmethacrylat, 2-[(1',1',1'-Trifluor-2'-(trifluormethyl)-2'-hydroxy)propyl]-3-norbornylmethacrylat, 2-Aminoethylmethacrylat-Hydrochlorid, 2-Butoxyethylmethacrylat, 2-Ethoxyethylmethacrylat, 2-Ethylhexylmethacrylat, 2-Hydroxyethylmethacrylat, 2-Hydroxypropyl-2-(methacryloyloxy)ethylphthalat, 2-Isocyanatoethylmethacrylat, 2-Methyl-2-nitropropylmethacrylat, 2-NMorpholinoethylmethacrylat, 2-[3-(2H-Benzotriazöl-2-yl)-4-hydroxyphenyl]ethylmethacrylat, 3,3,5-Trimethylcyclohexylmethacrylat, 3-(Trimethoxysilyl)propylmethacrylat, 3-[Tris(trimethylsiloxy)silyl]propylmethacrylat, 3-Chlor-2-hydroxypropylmethacrylat, 3-Sulfopropylmethacrylat als Kaliumsalz, 9HCarbazol-9-ethylmethacrylat, Allylmethacrylat, Benzylmethacrylat, Bis(2-methacryloyl)oxyethyldisulfid, Butylmethacrylat, Caprolacton-2-(methacryloyloxy)ethylester, Cyclohexylmethacrylat, Di(ethylenglykol)methylethermethacrylat, Di(propylenglykol)allylethermethacrylat, Ethylmethacrylat, Ethylenglykoldicyclopentenylethermethacrylat, Ethylenglykolmethylethermethacrylat, Ethylenglykolphenylethermethacrylat, Furfurylmethacrylat, Glycidylmethacrylat, Glycosyloxyethylmethacrylat, Hexylmethacrylat, Hydroxybutylmethacrylat, Hydroxypropylmethacrylat, Isobornylmethacrylat, Isobutylmethacrylat, Isodecylmethacrylat, Laurylmethacrylat, Methacrylsäure-NHydroxysuccinimid-Ester, Methylmethacrylat, Pentabromphenylmethacrylat, Phenylmethacrylat, Poly(ethylenglykol)-2,4,6-tris(1-phenylethyl)phenylethermethacrylat, Poly(ethylenglykol)biphenylethermethacrylat, Poly(propylenglykol)methacrylat, Stearylmethacrylat, TEMPO-Methacrylat, Tetrahydrofurfurylmethacrylat, Triethylenglykolmethylethermethacrylat, Triphenylmethylmethacrylat, Vinylmethacrylat, [2-(Methacryloyloxy)ethyl]dimethyl-(3-sulfopropyl)ammoniumhydroxid, [2-(Methacryloyloxy)ethyl]trimethylammoniumchlorid, [2-(Methacryloyloxy)ethyl]trimethylammoniummethylsulfat, [3-(Methacryloylamino)propyl]trimethylammoniumchlorid, [3-(Methacryloylamino)propyl]dimethyl(3-sulfopropyl)ammoniumhydroxid, Mono-2-(Methacryloyloxy)ethylmaleat, Mono-2-(Methacryloyloxy)ethylsuccinat, tert-Butylmethacrylat, Bisphenol-A-Dimethacrylat, ethoxyliertes Bisphenol-A-Diacrylat, ethoxyliertes Bisphenol-A-Dimethacrylat, Bisphenol-A-Glycerolat-Diacrylat, Bisphenol-A-Glycerolat-Dimethacrylat, propoxyliertes Bisphenol-A-Glycerolat-Diacrylat, ethoxyliertes Bisphenol-F-Diacrylat, 1,1,1,3,3,3-Hexafluorisopropylacrylat, 1,1,1,3,3,3-Hexafluorisopropylmethacrylat, 1,1,1-Trifluor-2-(trifluormethyl)-2-hydroxy-4-methyl-5-pentylmethacrylat, 1H,1H,2H,2HPerfluordecylacrylat, 2,2,2-Trifluorethylmethacrylat, 2,2,3,3,3-Pentafluorpropylacrylat, 2,2,3,3,3-Pentafluoipropylmethacrylat, 2,2,3,3,4,4,4-Heptafluorbutylacrylat, 2,2,3,3,4,4,4-Heptafluorbutylmethacrylat, 2,2,3,3,4,4,5,5,6,6,7,7-Dodecafluorheptylacrylat, 2,2,3,3,4,4,5,5-Octafluorpentylacrylat, 2,2,3,3,4,4,5,5-Octafluorpentylmethacrylat, 2,2,3,3-Tetrafluorpropylacrylat, 2,2,3,3-Tetrafluorpropylmethacrylat, 2,2,3,4,4,4-Hexafluorbutylacrylat, 2,2,3,4,4,4-Hexafluorbutylmethacrylat, 2-[(1',1',1'-Trifluor-2'-(trifluormethyl)-2'-hydroxy)propyl]-3-norbornylmethacrylat, 3,3,4,4,5,5,6,6,7,7,8,8,8-Tridecafluoroctylacrylat, 3,3,4,4,5,5,6,6,7,7,8,8,8-Tridecafluoroctylmethacrylat, 3,3,4,4,5,5,6,6,7,7,8,8,9,10,10,10-Hexadecafluor-9-(trifluormethyl)decylacrylat, 3,3,4,4,5,5,6,6,7,7,8,8,9,10,10,10-Hexadecafluor-9-(trifluormethyl)decylmethacrylat, 3,3,4,4,5,5,6,6,7,7,8,8,9,9,10,10,10-Heptadecafluordecylmethacrylat, 3,3,4,4,5,5,6,6,7,7,8,8,9,9,10,10,11,11,12,12,12-Heneicosafluordodecylacrylat, 3,3,4,4,5,5,6,6,7,7,8,8,9,9,10,10,11,11,12,12,12-Heneicosafluordodecylmethacrylat, 3,3,4,4,5,5,6,6,7,7,8,8,9,9,10,10,11,12,12,12-Eicosafluor-11-(trifluormethyl)dodecylmethacrylat, 3,3,4,4,5,5,6,6,7,8,8,8-Dodecafluor-7-(trifluormethyl)octylmethacrylat, 4,4,5,5,6,6,7,7,8,8,9,9,10,10,11,11,11-Heptadecafluor-2-hydroxyundecylacrylat, 4,4,5,5,6,6,7,7,8,9,9,9-Dodecafluor-2-hydroxy-8-(trifluormethyl)nonylmethacrylat, 4,4,5,5,6,7,7,7-Octafluor-2-hydroxy-6-(trifluormethyl)heptylacrylat, 1,3,5-Triacryloylhexahydro-1,3,5-triazin, 1,3-Butandioldiacrylat, 1,3-Butandioldimethacrylat, 1,4-Butandioldiacrylat, 1,4-Butandioldimethacrylat, 1,6-Hexandiylbis[oxy(2-hydroxy-3,1-propandiyl)]bisacrylat, 1,6-Hexandioldiacrylat, 1,6-Hexandioldimethacrylat, ethoxyliertes 1,6-Hexandioldiacrylat, 3-(Acryloyloxy)-2-hydroxypropylmethacrylat, 3-Hydroxy-2,2-dimethylpropyl-3-hydroxy-2,2-dimethylpropionatdiacrylat, Bis[2-(methacryloyloxy)ethyl]phosphat, Di(trimethylolpropan)tetraacrylat, Diurethandimethacrylat, Glycerol-1,3-diglycerolatdiacrylat, Glyceroldimethacrylat, propoxyliertes Glyceroltriacrylat, Hydroxypivalylhydroxypivalat-bis[6-(acryloyloxy)hexanoat], N,N'-(1,2-Dihydroxyethylen)bisacrylamid, N,N'-Ethylenbis(acrylamid), Neopentylglykoldiacrylat, propoxyliertes Neopentylglykoldiacrylat, Pentaerythritoldiacrylatmonostearat, Pentaerythritoltetraacrylat, Pentaerythritoltriacrylat, Tricyclo[ 5.2.1.02,6]decandimethanoldiacrylat, Trimethylolpropanbenzoatdiacrylat, ethoxyliertes Trimethylolpropanmethyletherdiacrylat, ethoxyliertes Trimethylolpropantriacrylat, Trimethylolpropantrimethacrylat und Tris[2-(acryloyloxy)ethyl]isocyanurat, welche von Anbietern wie Sigma-Aldrich bezogen werden können.

Die (Meth)acrylate können sowohl als Reinkomponente als auch in Mischungen zur Formulierung der Wasserzeichentinte nach der Erfindung eingesetzt werden.

Die Tinte wird aus zumindest einem (Meth)acrylat in einem Gesamtanteil formuliert, der ausgewählt ist aus einem Bereich mit einer unteren Grenze von 50 Gew.- % und einer oberen Grenze von 99 Gew.-%. Unterhalb von 50 Gew.-% ist zwar noch eine Härtung der formulierten Wasserzeichentinte möglich, jedoch ist die Feuchtebeständigkeit des erhaltenen Wasserzeichens für praktische Anwendungen unzureichend, sodass ein leichtes Auswaschen des Wasserzeichens auftritt. Es sei angemerkt, dass oberhalb von 80 Gew.-% (Meth)acrylaten in der Tinte keine weitere Verbesserung im Hinblick auf die Stabilität der erhaltenen latenten Wasserzeichen festgestellt werden kann, sodass der (Gesamt)anteil an dem zumindest einem (Meth)acrylat vorzugsweise ausgewählt ist aus einem Bereich mit einer unteren Grenze von 50 Gew.-% und einer oberen Grenze von 80 Gew.-%.

In Mischungen übernehmen die genannten (Meth)acrylate in der erfindungsgemäßen Tinte unterschiedliche Aufgaben, welche einerseits die Druckbarkeit (z.B. Steuerung der Tintenrheologie) und andererseits die Kontrolle der Polarität der Oberflächenenergien von gehärteten Schichten betreffen. Dies hebt die erfindungsgemäße Tinte von den übrigen dem Stand der Technik entsprechenden Tintenstrahltinten ab, deren Inhaltsstoffe die Druckbarkeit und Haftung steuern. Beispielsweise dienen in der erfindungsgemäßen Tinte (meth)acrylierte Glykole insbesondere der Steuerung der Tintenrheologie und damit der Gewährleistung der Druckbarkeit, während (Meth)acrylate mit Hydroxy-, Amino-, Thiol-, Carboxy-, Silyl-, Furfuryl-, Al-kyl- und Fluoroalkylresten eine Polaritätskontrolle bewirken. Nicht übernehmen in der erfindungsgemäßen Tinte die genannten (Meth)acrylate eine Quellaufgabe, welche für die Haftung auf z.B. Kunststoffen notwendig wäre und deshalb häufig in Standardtintenstrahltinten eingesetzt werden. Höher funktionalisierte (Meth)acrylate, also Verbindungen mit über zwei (Meth)acrylresten pro Monomer, dienen vorrangig zur intensiveren Quervernetzung der Tinte zur Vermeidung von Auswascheffekten. Auch hier kann von einer zum Stand der Technik abweichenden Verwendung gesprochen werden, zumal höher funktionalisierte (Meth)acrylate in Standardtintenstrahltinten vorrangig zur Kontrolle der mechanischen Eigenschaften (z.B. Härte) eingesetzt werden.

Als weiteren Bestandteil kann die erfindungsgemäße Tinte zumindest einen UVInitiator und/oder einen thermischen Initiator enthalten. Beispiele hierfür sind diverse Irgacure®-Initiatoren, diverse Darocure®-Iniliatoren, verschiedene Phenone, verschiedene Benzoine usw. beziehungsweise Azobisisobutyronitril, 1,1'- Azobis(cyclohexancarbonitril), t-Butylhydroperoxid, m-Chlorperbenzoesäure, Dibenzoylperoxid, Di-t-butylperoxid usw. Die in diesem Zusammenhang eingesetzten Initiatoren entsprechen dem jeweiligen Stand der Technik, weshalb auf die einschlägige Fachliteratur verwiesen sei.

Diese Initiatoren bzw. eine Initiatormischung daraus können in einem Anteil von 0.2 Gew.-% bis 20 Gew.-%, insbesondere in einem Anteil zwischen 1,2 Gew.-% und 12,45 Gew.-%, enthalten sein.

Der Großteil dieser Initiatoren kann von Sigma-Aldrich, CIBA, Fluka, usw. bezogen werden.

Weiter kann in der erfindungsgemäßen Tinte zumindest ein weiteres Tensid oder eine Tensidmischung enthalten sein, welche(s) nicht kovalent in das Tintennetzwerk, das durch die Härtung aus dem (Meth)acrylat entsteht, eingebunden werden. Als Tenside können anionische, kationische, nichtionische oder ampholytische Tenside oder deren Mischungen verwendet werden.

Beispiele für anionische Tenside sind Carboxylat-, Sulfat-, Phosphat- oder Sulfonat- Gruppen aufweisende Tenside, wie zum Beispiel Aminsäurederiväte, Fettalkoholethersulfate, Fettalkoholsulfate, Seifen, Alkylphenolethoxylate, Fettalkoholethoxylate, aber auch Alkansulfonate, Olefinsulfonate oder Alkylphosphate. Beispiele für nichtionische Tenside sind Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenylpolyglykolether, wie zum Beispiel Fettalkoholpolyglykolether, oder Fettsäureamide, Alkylglykoside, Zuckerester, Sorbitanester, Polysorbate oder Trialkylaminoxide, aber auch Ester und Amide aus Poly(meth)acrylsäuren mit Polyalkylenglykolen oder Aminopolyalkylenglykole, die allenfalls einseitig mit Alklygruppen abgeschlossen sein können.

Beispiele für kationische Tenside sind quaternäre Ammonium- oder Phosphoniumverbindungen, wie zum Beispiel Tetraalkylammoniumsalze, N,NDialkylimidazölinverbindungen, Dimethyldistearylammoniumverbindungen, oder NAlkylpyridinverbindungen, insbesondere aber Ammoniumchloride. Zu den ampholytischen Tensiden gehören amphotere Elektrolyte, so genannte Ampholyte, wie zum Beispiel Aminocarbonsäuren und Betaine.

Der Anteil dieser Tenside kann ausgewählt sein aus einem Bereich von 0.5 Gew.-% bis 25 Gew.-%, insbesondere aus einem Bereich von 1.75 Gew.-% bis 20 Gew.-%.

Derartige Tenside sind kommerziell breit erhältlich und können z.B. von Sigma-Aldrich bezogen werden.

Zur Vermeidung der Schaumbildung im Inkjet-Prozess, kann der Tinte bei Bedarf zumindest ein Entschäumer, z.B. auf Silikonbasis, zugesetzt werden. Allgemein sei hier erwähnt, dass die Entschäumermenge in der Tintenformulierung auf ein Mindestmaß reduziert werden sollte, um unerwünschte Substratbenetzungsphänomene zu vermeiden.

Der zumindest eine Entschäumer kann in einem Anteil von 0.1 Gew.-% bis 10 Gew.-%, insbesondere 0,1 Gew.-% bis 4 Gew.-%, beigemengt sein.

Ein Bezug dieser Entschäumer ist z.B. von CIBA oder Sigma-Aldrich möglich.

Im Folgenden werden nun einige bevorzugte Beispiele der erfindungsgemäßen Ansätze zur Herstellung von latenten Wasserzeichen dargestellt. Die Ausführungsbeispiele zeigen nur bevorzugte Ausführungsvarianten, wobei an dieser Stelle bemerkt sei, dass die Erfindung nicht auf die speziell beschriebenen Beispiele eingeschränkt ist, sondern vielmehr auch diverse Kombinationen der einzelnen Ausführungsvarianten untereinander möglich sind. Diese Variationsmöglichkeiten liegen aufgrund der Lehre zum technischen Handeln durch gegenständliche Erfindung im Können des auf diesem technischen Gebiet tätigen Fachmanns.

### Beispiel 1:

Ein erster Bereich einer saugfähigen Oberfläche eines Papiersubstrats wurde mit Tinte in Form von Tintentropfen in einem Schritt (b) gemäß einem ersten Druckschema bedruckt. Die Tinte bestand aus einer Mischung Polypropylenglykolacrylat (16.4 Gew.-%), Polypropylenglykoldiacrylat (12.7 Gew.-%), 2-Carboxyethylacrylat (8.6 Gew.-%), 2-Hydroxyethylmethacrylat (38.3 Gew.-%), Di(trimethylolpropan)tetraacrylat (13.8 Gew.-%), 3-(Acryloyloxy)-2-hydroxypropylmethacrylat (3.1 Gew.-%), 2-(N-3-Sulfopropyl-N,N-dimethylammonium)ethylmethacrylat (2.2 Gew.-%) und 2-Hydroxy-2-methylpropiophenon (4.9 Gew.-%). Der Tropfen/Tropfen Abstand der Tintentropfen lag zwischen 25 µm und 40 µm und der Tropfenvolumen betrug annähernd 10 pl. Die Tinte wurde mit 10-pL-Piezodruckköpfen verdruckt. Ein zweiter Bereich wurde gemäß Schritt (c) entsprechend einem zweiten Druckschema unverändert belassen bzw. nicht bedruckt. Nach der UV-Härtung der Tinte (Quecksilberdampflampe; ca. 1500 mJ/cm2) war das aufgedruckte latente Wasserzeichen für das menschliche Auge unsichtbar. Erst durch das Betupfen des ersten und zweiten Bereichs gemäß Schritt (e) mit einem wassergetränkten Tuch wurde das Wasserzeichen sichtbar.

Die Tinte weist eine Polarität der Oberflächenenergie (Methode nach Owens-Wendt-Rabel-Kaelble) von ca. 34%auf.

### Beispiel 2:

Ein erster Bereich einer saugfähigen Oberfläche eines Kartons wurde mit Tinte in Form von Tintentropfen in einem Schritt (b) gemäß einem ersten Druckschema bedruckt. Die Tinte bestand aus einer Mischung Polypropylenglykolacrylat (15.9 Gew.-%), Polypropylenglykoldiacrylat (12.7 Gew.-%), 2-Carboxyethylacrylat (8.6 Gew.-%), 2-Hydroxyethylmethacrylat (38.3 Gew.-%), Di(trimethylolpropan)tetraacrylat (10.8 Gew.-%), 3-(Acryloyloxy)-2-hydroxypropylmethacrylat (3.1 Gew.-%), 2-(N-3-Sulfopropyl-N,N-dimethylammonium)ethylmethacrylat (2.2 Gew.-%) und Azobisisobutyronitril (8.4 Gew.-%). Der Tropfen/Tropfen Abstand der Tintentropfen lag zwischen 25 µm und 40 µm und der Tropfenvolumen betrug annähernd 10 pl. Die Tinte wurde mit 10-pL-P Piezodruckköpfen verdruckt. Ein zweiter Bereich wurde gemäß Schritt (c) entsprechend einem zweiten Druckschema unverändert belassen bzw. nicht bedruckt. Nach einer thermischen Trocknung für 5 Minuten bei 80 °C war das aufgedruckte latente Wasserzeichen für das menschliche Auge unsichtbar. Erst durch das Betupfen des ersten und zweiten Bereichs gemäß Schritt (e) mit einem wassergetränkten Tuch wurde das Wasserzeichen sichtbar.

Die Tinte weist eine Polarität der Oberflächenenergie (Methode nach Owens-Wendt-Rabel-Kaelble) von ca. 31%.auf.

### Beispiel 3:

Mehrere Bereiche einer saugfähigen Oberfläche eines Papiersubstrats wurden mit Tinte in Form von Tintentropfen in mehreren Schritten (b) und (c) gemäß mehreren Druckschemas bedruckt. Die Tinte bestand aus einer Mischung Octadecylacrylat (28.5 Gew.-%), Hexamethylendiacrylat (17.4 Gew.-%), Ethylhexylacrylat (24.6 Gew.-%), Trimethylolpropantriacrylat (25.1 Gew.-%), Irgacure 819 (3.0 Gew.-%) und Benzophenon (1.4 Gew.-%). Der Tropfen/Tropfen Abstand betrug in den genannten Bereichen zwischen 15 µm und 100 µm und der Tropfenvolumen betrug annähernd 1 pl. Die Tinte wurde mit 1-pLPiezodruckköpfen verdruckt. Nach der UV-Härtung der Tinte (Quecksilberdampflampe; ca. 1500 mJ/cm2) war das aufgedruckte latente Wasserzeichen für das menschliche Auge unsichtbar. Erst durch das Betupfen aller Bereiche mit einem wassergetränkten Tuch wurde das gesamte Wasserzeichen sichtbar.

Die Tinte weist eine Polarität der Oberflächenenergie (Methode nach Owens-Wendt-Rabel-Kaelble) von ca. 9% auf.

### Beispiel 4:

Mehrere Bereiche einer saugfähigen Oberfläche eines Papiersubstrats wurden mit Tinte in Form von Tintentropfen in mehreren Schritten (b) und (c) gemäß mehreren Druckschemas bedruckt. Die Tinte bestand aus einer Mischung 2-Hydroxyethylmethacrylat (64.8 Gew.-%), Di(trimethylolpropan)tetraacrylat (20.1 Gew.-%), Glycerol-1,3-diglycerolatdiacrylat (8.6 Gew.-%), 2-(N-3-Sulfopropyl-N,N-dimethylammonium)ethylmethacrylat (1.7 Gew.-%) und Dibenzoylperoxid (4.8 Gew.-%). Der Tropfen/Tropfen Abstand betrug in den genannten Bereichen zwischen 15 µm und 100 µm und der Tropfenvolumen betrug annähernd 1 pl. Die Tinte wurde mit 1-pL-Piezodruckköpfen verdruckt. Nach einer thermischen Trocknung für 5 Minuten bei 80 °C war das aufgedruckte latente Wasserzeichen für das menschliche Auge unsichtbar. Erst durch das Betupfen aller Bereiche mit einem wassergetränkten Tuch wurde das gesamte Wasserzeichen sichtbar.

Die Tinte weist eine Polarität der Oberflächenenergie (Methode nach Owens- Wendt-Rabel-Kaelble) von ca. 42% auf.

### Beispiel 5:

Mehrere Bereiche einer saugfähigen Oberfläche eines Papiersubstrats wurden mit Tinte in Form von Tintentropfen in mehreren Schritten (b) und (c) gemäß mehreren Druckschemas bedruckt. Die Tinte bestand aus einer Mischung aus Polypropylenglykolacrylat (52.4 Gew.-%), 2- Carboxyethylacrylat (45.0 Gew.-%) und 2-Hydroxy-2-methylpropiophenon (2.6 Gew.-%). Der Tropfen/Tropfen Abstand betrug in den genannten Bereichen zwischen 50 µm und 100 µm und der Tropfenvolumen betrug annähernd 30 pl. Die Tinte wurde mit 30-pL-Piezodruckköpfen verdruckt. Nach der UV-Härtung der Tinte (Quecksilberdampflampe; ca. 1500 mJ/cm2) war das aufgedruckte latente Wasserzeichen für das menschliche Auge unsichtbar. Erst durch das Betupfen aller Bereiche mit einem wassergetränkten Tuch wurde das ganze Wasserzeichen sichtbar.

Die Tinte weist eine Polarität der Oberflächenenergie (Methode nach Owens-Wendt-Rabel-Kaelble) von ca. 44% auf.

### Beispiel 6:

Mehrere Bereiche einer saugfähigen Oberfläche eines Papiersubstrats wurden mit Tinte in Form von Tintentropfen in mehreren Schritten (b) und (c) gemäß mehreren Druckschemas bedruckt, wobei auch ein Bereich unverändert belassen wurde. Die Tinte bestand aus einer Mischung Hexylacrylat (32.7 Gew.-%), Hexamethylendiacrylat (32.1 Gew.-%), Di(trimethylolpropan)tetraacrylat (30.7 Gew.-%), Azobisisobutyronitril(3.0 Gew.-%) und Dibenzoylperoxid (1.5 Gew.-%). Der Tropfen/Tropfen Abstand betrug in den genannten Bereichen zwischen 50 µm und 100 µm und der Tropfenvolumen betrug annähernd 30 pl. Die Tinte wurde mit 30-pLPiezodruckköpfen verdruckt. Nach einer thermischen Trocknung für 5 Minuten bei 80 °C war das aufgedruckte latente Wasserzeichen für das menschliche Auge unsichtbar. Erst durch das Betupfen aller Bereiche mit einem wassergetränkten Tuch wurde das ganze Wasserzeichen sichtbar.

Die Tinte weist eine Polarität der Oberflächenenergie (Methode nach Owens-Wendt-Rabel-Kaelble) von ca. 18% auf.

Anstelle des Betupfens kann das Wasser auch mit anderen Methoden, beispielsweise durch Aufsprühen, etc. aufgebracht werden. Bei sämtlichen Beispielen wird das Wasserzeichen wieder unsichtbar, sobald das Wasser abgedampft ist. Weiter sei angemerkt, dass Sichtbarmachen und das Unsichtbar werden des Wasserzeichens mehrmals wiederholbar sind.

Anstelle von Wasser kann auch ein anderes Lösungsmittel verwendet werden, beispielsweise ein Alkohol, insbesondere Ethanol, oder Ether (z.B. Diethylether), Ketone (z.B. Aceton der Butanon), Ester (z.B. Essigester) oder halogenierte Kohlenwasserstoffe (z.B. Dichlormethan), wobei bevorzugt ein polares Lösungsmittel eingesetzt wird. Ein polares Lösungsmittel ist im Sinne der Erfindung ein Lösungsmittel, das eine Permittivität von zumindest 4 aufweist.

Zum Unterschied zur EP 1 354 919 B1 ist die Tinte nach der Erfindung frei von fluoreszenten Verbindungen als latentes Merkmal. Es wird daher kein UV-Licht zum Sichtbarmachen des Sicherheitsmerkmals benötigt, sondern lediglich ein Lösungsmittel, vorzugsweise Wasser, das praktisch überall zur Verfügung steht. In der EP 1 354 919 B1 werden (Meth)acrylate und sonstige mittels energiereicher Strahlung härtbare Materialien ausschließlich als Matrix zum Immobilisieren des organischen Fluoreszenzfarbstoffes verwendet, also nicht zur Steuerung des Substratbenetzungsverhaltens.

Im Vergleich zum System nach der WO 01/15903 A1 ist das Sicherheitsmerkmal nach der Erfindung nicht permanent sichtbar. Darüber hinaus hebt sich das System nach der Erfindung auch durch den Tintenauftrag ab. Während nach der WO 01/15903 A1 das Substrat durchtränkt wird, erzeugt die Erfindung u.a. durch einen großen Tropfenabstand unsichtbare (latente) Bilder unter gleichzeitiger Steuerung der Substrataufnahmefähigkeit für z.B. Wasser. Somit nutzt die WO 01/15903 A1 die (Meth)acrylate zur Durchtränkung des Substrates, wohingegen die Erfindung die (Meth)acrylate zur Substratfunktionalisierung nutzt.

Zum Unterschied zur US 4,784,876 werden beim Sichtbarmachen des Wasserzeichens auch keine wie immer gearteten Reagenzien verwendet, die irreversibel mit dem Sicherheitsmerkmal, d.h. der aufgedruckten Tinte zu einer gefärbten Verbindung reagieren. Es sind also nach der Erfindung keine chemischen Reagenzien an sich als Entwicklerlösung zur Initiierung einer Farbreaktion notwendig.

Die Tinte nach der Erfindung enthält insbesondere zumindest ein (Meth)acrylath mit sehr hoher Polarität oder zumindest ein (Meth)acrylath mit sehr niedriger Polarität, wobei auch Mischungen aus zumindest zwei unterschiedlichen (Meth)acrylaten möglich sind. In diesem Fall sind zumindest ein (Meth)acrylath mit einer sehr hohen Polarität und zumindest ein (Meth)acrylath mit einer sehr niedrigen Polarität in der Mischung enthalten.

Betrachtet man die voranstehenden Beispiele, so sind alle Tinten aus zwei Gruppen von (Meth)acrylaten formuliert:
1. extrem polare (z.B. Hydroxyethylmethacrylat, Carboxyethylacrylat, 2-(N-3-Sulfopropyl-N,N-dimethylammonium)ethylmethacrylat , usw., und/oder extrem unpolare (z.B. Octadecylacrylat, Hexamethylendiacrylat, Ethylhexylacrylat, usw. (solche Eigenschaften haben auch die Fluoroalkyl(meth)acrylate) Inhaltsstoffe und
2. Rheologieregler (z.B. Glykolacrylate, Di(trimethylolpropan)tetraacrylat, usw.), die dazu verwendet werden, um die Druckbarkeit der Tinte mit einem Tintenstrahldrucker zu verbessern.

Unter einer sehr hohen Polarität wird dabei verstanden, dass das (Meth)acrylat in ausgehärteter Form einen polaren Anteil der Oberflächenenergie zwischen 35 % und 70 % aufweist (Methode nach Owens-Wendt-Rabel-Kaelble). Unter einer sehr niedrigen Polarität wird dabei verstanden, dass das (Meth)acrylat in ausgehärteter Form einen polaren Anteil der Oberflächenenergie zwischen 5 % und 30 % aufweist (Methode nach Owens-Wendt-Rabel-Kaelble).

## Patentansprüche

1. Verfahren zur Erhöhung der Fälschungssicherheit eines Gegenstandes mit einem latenten Sicherheitsmerkmal beinhaltend folgende Schritte:
a) Bereitstellen eines Substrats mit mindestens einer saugfähigen Oberfläche mit erstem und zweitem Bereich
b) Bedrucken des ersten Bereichs der mindestens einen saugfähigen Oberfläche mit Tinte durch Aufbringen von Tintentropfen gemäß eines ersten Druckschemas
c) Bedrucken des zweiten Bereichs gemäß eines zweiten Druckschemas
d) falls notwendig, Behandlung der gemäß den Schritten b) und/oder c) bedruckten oder nicht veränderten Bereiche dergestalt, dass sich nach der Behandlung der erste Bereich vom zweiten Bereich optisch nicht unterscheidet, sodass das Sicherheitsmerkmal für das Auge nicht zum Vorschein kommt
**dadurch gekennzeichnet, dass**
e) Tintentropfen der Tinte auf dem saugfähigem Substrat bevorzugt beabstandet zueinander vorliegen und sich erstes und zweites Druckschema derart unterscheiden, dass bei Aufbringung einer Flüssigkeit auf den ersten und zweiten Bereich, ohne dass es zu einer chemischen Reaktion kommt, sich der erste Bereich optisch vom zweiten Bereich unterscheidet, sodass das Sicherheitsmerkmal für das Auge zum Vorschein kommt und mit zunehmender Abdampfung der Flüssigkeit die optischen Unterschiede zunehmend kleiner werden bis die beiden Bereiche optisch voneinander sich nicht mehr unterscheiden, sodass das latente Sicherheitsmerkmal wieder unsichtbar wird, wobei das erste und zweite Druckschema gemäß unterschiedlicher Rasterdichten und/oder Tintentropfengrößen dergestalt bedruckt werden, dass an einem Übergang vom ersten zum zweiten Bereich die Rasterdichte und/oder die Tintentropfengröße kontinuierlich und/oder stufenweise oder abrupt ansteigt bzw. abfällt, wobei der Quotient zwischen größter und kleinster Rasterdichte und/oder der Quotient zwischen größter und kleinster Tintentropfengröße im ersten und zweiten Bereich einen Rasterdichten-Grenzwert und/oder Tintentropfengrößen-Grenzwert überschreitet, wobei der Rasterdichten-Grenzwert auf den Unterschied zwischen größter und kleinster Rasterdichte und Tintentropfengrößen-Grenzwert auf den Unterschied zwischen größter und kleinster Tintentropfengröße bezogen ist.

2. Verfahren nach Anspruch 1, **dadurch gekennzeichnet, dass** das erste und zweite Druckschema gemäß unterschiedlicher Rasterdichten und/oder Tintentropfengrößen dergestalt bedruckt wird, dass an einem Übergang vom ersten zum zweiten Bereich die Rasterdichte und/oder die Tintentropfengröße monoton und bevorzugt streng monoton ansteigt bzw. abfällt, wobei der Unterschied zwischen größter und kleinster Rasterdichte und/oder der Unterschied zwischen größter und kleinster Tintentropfengröße im ersten und zweiten Bereich einen Rasterdichten-Grenzwert und/oder Tintentropfengrößen-Grenzwert überschreitet.

3. Verfahren nach Anspruch 1 oder 2, **dadurch gekennzeichnet, dass** die Schritte (b) und/oder (c) und/oder (d) zeitlich getrennt und/oder zeitgleich durchgeführt werden und Schritt (d) gegebenenfalls zwischen den Schritten (b) und (c) und/oder als letzter Schritt durchgeführt wird.

4. Verfahren nach einem der vorangehenden Ansprüche, **dadurch gekennzeichnet, dass** das erste und/oder zweite Bereich der mindestens einen saugfähigen Oberfläche des Substrats einseitig und/oder beidseitig gemäß den Schritten (b) und (c) bedruckt wird.

5. Verfahren nach einem der vorangehenden Ansprüche, **dadurch gekennzeichnet, dass** der erste Bereich und optional der zweite Bereich gemäß eines farbigen weiteren, dritten Druckmusters, welches nicht das Sicherheitsmerkmal bildet, dergestalt bedruckt wird, indem Tintentropfen einer farbigen Tinte auf dem saugfähigen Substrat bevorzugt beabstandet zueinander und bevorzugt beabstandet zu den Tintentropfen des ersten und/oder des zweiten Druckschemas aufgebracht werden, wobei das farbige Druckmuster im trockenen und feuchten Zustand für das Auge zum Vorschein kommt.

6. Verfahren nach einem der vorangehenden Ansprüche, **dadurch gekennzeichnet, dass** die Behandlung der Tinte durch Bestrahlung und/oder durch Erwärmung und/oder durch chemische Reaktion und/oder durch zeitliches Abwarten erfolgt, wobei eine zumindest teilweise Polymerisation und/oder eine zumindest teilweise Trocknung der Tinte bzw. vom Sicherheitsmerkmal eintritt.

7. Verfahren nach einem der vorangehenden Ansprüche, **dadurch gekennzeichnet, dass** die Aufbringung einer Flüssigkeit einseitig und/oder beidseitig auf den ersten und/oder zweiten Bereich der mindestens einen saugfähigen Oberfläche erfolgt.

8. Verfahren nach einem der vorangehenden Ansprüche, **dadurch gekennzeichnet, dass** der Tropfen/Tropfen Abstand bevorzugt in einem Bereich zwischen 5 bis 150 µm und bevorzugter in einem Bereich zwischen 15 bis 100 µm liegt.

9. Verfahren nach einem der vorangehenden Ansprüche, **dadurch gekennzeichnet, dass** als Flüssigkeit zur Sichtbarmachung des Sicherheitsmerkmals eine polare Flüssigkeit verwendet wird.

10. Verfahren nach einem der vorangehenden Ansprüche, **dadurch gekennzeichnet, dass** die polare Flüssigkeit ausgewählt ist aus einer Gruppe umfassend oder bestehend aus Wasser, Alkohole, Ether, Ketone, Ester oder halogenierte Kohlenwasserstoffe.

11. Verfahren nach einem der vorangehenden Ansprüche, **dadurch gekennzeichnet, dass** als Tinte eine Tinte auf Basis zumindest eines (Meth)acrylats verwendet wird.

12. Verfahren nach Anspruch 11, **dadurch gekennzeichnet, dass** eine Tinte verwendet wird, die das (Meth)acrylats in einem Anteil zwischen 50 Gew.-% und 99 Gew.-% enthalten ist und zumindest eine funktionelle Gruppe aufweist, die ausgewählt ist aus einer Gruppe umfassend oder bestehend aus Glykolgruppen, Hydroxygruppen, Aminogruppen, Thiolgruppen, Carboxygruppen, Silylgruppen, Furfurylgruppen, Alkylgruppen oder Fluoroalkylgruppen, wobei die Tinte bevorzugt farblos ist und das zumindest eine (Meth)acrylat in der ausgehärteten Form einen polaren Anteil der Oberflächenenergie zwischen 35 % und 70 % oder zwischen 5 % und 30 % aufweist (Methode nach Owens-Wendt-Rabel-Kaelble).

13. Verfahren nach Anspruch 12, **dadurch gekennzeichnet, dass** eine Tinte verwendet wird, die zumindest ein Tensid enthält, das nicht kovalent in ein aus dem zumindest einen (Meth)acrylat gebildeten Tintennetzwerk eingebaut wird.

14. Verfahren nach Anspruch 12 oder 13, **dadurch gekennzeichnet, dass** eine Tinte verwendet wird, die ein Polarität zwischen 1 % und 55 % aufweist.

15. Fälschungssicherer Gegenstand, welcher ein Substrat mit mindestens einer saugfähigen Oberfläche mit erstem und zweitem Bereich aufweist, auf welcher zumindest einen Oberfläche der erste Bereich gemäß eines ersten Druckschemas und der zweite Bereich gemäß eines zweiten Druckschemas mit Tinte in Form von Tintentropfen bedruckt ist und gegebenenfalls gemäß einer Behandlungsmethode behandelt ist, wobei der erste Bereich sich vom zweiten Bereich zumindest für das menschliche Auge optisch nicht unterscheidet, sodass im vorzugsweise gleichzeitig trockenen Zustand des ersten und zweiten Bereichs das Sicherheitsmerkmal für das menschliche Auge nicht sichtbar ist, **dadurch gekennzeichnet, dass** sich erster und zweiter Bereich derart unterscheiden, dass in einem zumindest teilweise gleichzeitig feuchten Zustand des ersten und zweiten Bereichs sich der erste Bereich ohne chemische Reaktion optisch vom zweiten Bereich unterscheidet, sodass das latente Sicherheitsmerkmal für das menschliche Auge sichtbar ist, wobei das erste und zweite Druckschema gemäß unterschiedlicher Rasterdichten und/oder Tinteritropfengrößen dergestalt bedruckt werden, dass an einem Übergang vom ersten zum zweiten Bereich die Rasterdichte und/oder die Tintentropfengröße kontinuierlich und/oder stufenweise oder abrupt ansteigt bzw. abfällt, wobei der Quotient zwischen größter und kleinster Rasterdichte und/oder der Quotient zwischen größter und kleinster Tintentropfengröße im ersten und zweiten Bereich einen Rasterdichten-Grenzwert und/oder Tintentropfengrößen-Grenzwert überschreitet, wobei der Rasterdichten-Grenzwert auf den Unterschied zwischen größter und kleinster Rasterdichte und Tintentropfengrößen-Grenzwert auf den Unterschied zwischen größter und kleinster Tintentropfengröße bezogen ist.

16. Gegenstand nach Anspruch 15, **dadurch gekennzeichnet, dass** das erste und zweite Druckschema derart unterschiedliche Rasterdichten und/oder Tintentropfengrößen aufweist, dass die Rasterdichte und/oder die Tintentropfengröße an einem Übergang vom ersten zum zweiten Bereich monoton und bevorzugt streng monoton ansteigt bzw. abfällt, wobei der Unterschied zwischen größter und kleinster Rasterdichte und/oder der Unterschied zwischen größter und kleinster Tintentropfengröße im ersten und zweiten Bereich einen Rasterdichten-Grenzwert und/oder Tintentropfengrößen-Grenzwert überschreitet.

17. Gegenstand nach Anspruch 15 oder 16, **dadurch gekennzeichnet, dass** der erste und/oder der zweite Bereich der mindestens einen saugfähigen Oberfläche des Substrats einseitig und/oder beidseitig gemäß den Schritten (b) und (c) nach Anspruch 1 bedruckt ist.

18. Gegenstand nach einem der Ansprüche 15 bis 17, **dadurch gekennzeichnet, dass** der erste Bereich und optional der zweite Bereich zusätzlich gemäß eines farbigen weiteren Druckmusters, welches nicht das Sicherheitsmerkmal bildet, dergestalt bedruckt ist, indem Tintentropfen einer farbigen Tinte auf dem saugfähigen Substrat bevorzugt beabstandet zueinander und bevorzugt beabstandet zu den Tintentropfen des ersten und/oder des zweiten Druckschemas aufgebracht sind, wobei das farbige Druckmuster im trockenen und feuchten Zustand für das Auge sichtbar ist.

19. Gegenstand nach einem der Ansprüche 15 bis 18 **dadurch gekennzeichnet, dass** der Tropfen/Tropfen Abstand in einem Bereich zwischen 5 bis 150 µm, bevorzugt, in einem Bereich zwischen 15 bis 100 µm, liegt.

20. Gegenstand nach einem der Ansprüche 15 bis 19, **dadurch gekennzeichnet, dass** der mit dem Sicherheitsmerkmal bedruckte Bereich der saugfähigen Oberfläche eine Polarität der Oberflächenenergie zwischen 1 % und 55% aufweist.

## Claims

1. A method for increasing the counterfeit protection for an article with a latent safety feature comprising the following steps:
a) providing a substrate with at least one absorbent surface with first and second region
b) printing the first region of the at least one absorbent surface with ink by applying ink drops according to a first print pattern
c) printing the second region according to a second print pattern
d) if necessary, treating the regions which are printed according to the steps b) and/or c) or which are not changed in such a manner that following the treatment the first region does not visually differ from the second region so that the safety feature is not apparent to the eye
**characterized in that**
e) ink drops of the ink are present on the absorbent substrate preferably spaced from one another and first and second print pattern differ from one another in such a manner that when applying a liquid to the first and second region without a chemical reaction taking place, the first region visually differs from the second region so that the safety feature is apparent to the eye and with increasing evaporation of the liquid the visual differences become increasingly smaller until the two regions no longer visually differ from one another so that the latent safety feature again becomes invisible, wherein the first and the second print pattern are printed according to different screen densities and/or ink drop sizes in such a manner that at a transition from the first to the second region the screen density and/or the ink drop size increases or decreases continuously and/or in steps or abruptly, wherein the quotient between largest and smallest ink drop size in the first and second region exceeds a screen density limit value and/or ink drop size limit value, wherein the screen density limit value is based on the difference between greatest and smallest screen density and ink drop size limit value to the difference between largest and smallest ink drop size.

2. The method according to claim 1, **characterized in that** the first and second print pattern is printed according to different screen densities and/or ink drop sizes in such a manner that at a transition from the first to the second region the screen density and/or the ink drop size monotonously and preferably strictly monotonously increases or decreases, wherein the difference between greatest and smallest screen density and/or the difference between largest and smallest ink drop size in the first and second region exceeds a screen density limit value and/or ink drop size limit value.

3. The method according to claim 1 or 2, **characterized in that** the steps b) and/or c) and/or d) are carried out separately with respect to time and/or at the same time and step d) if appropriate is carried out between the steps b) and c) and/or as last step.

4. The method according to any one of the preceding claims, **characterized in that** the first and/or second region of the at least one absorbent surface of the substrate is printed on one side and/or both sides according to the steps b) and c).

5. The method according to any one of the preceding claims, **characterized in that** the first region and optionally the second region is printed according to a colour further third print pattern which does not form the safety feature in such a manner **in that** ink drops of a colour ink are applied to the absorbent substrate preferably spaced from one another and preferably spaced from the ink drops of the first and/or of the second print pattern, wherein the colour print pattern in the dry and moist state becomes apparent to the eye.

6. The method according to any one of the preceding claims, **characterized in that** the treatment of the ink is effected through radiation and/or through heating and/or through chemical reaction and/or through temporal waiting, wherein at least partial polymerisation and/or at least partial drying of the ink respective of the safety feature takes place.

7. The method according to any one of the preceding claims, **characterized in that** applying a liquid on one side and/or on both sides to the first and/or second region of the at least one absorbent surface takes place.

8. The method according to any one of the preceding claims, **characterized in that** the drop/drop distance is preferably in a range between 5 to 150 µm and more preferably in a range between 15 to 100 µm.

9. The method according to any one of the preceding claims, **characterized in that** as liquid for visualising the safety feature a polar liquid is used.

10. The method according to any one of the preceding claims, **characterized in that** the polar liquid is selected from a group comprising or consisting of water, alcohols, ethers, ketones, esters or halogenised hydrocarbons.

11. The method according to any one of the preceding claims, **characterized in that** as ink an ink based on at least one (meth) acrylate is used.

12. The method according to claim 11, **characterized in that** an ink is used which contains the (meth) acrylate in a fraction between 50% by weight and 99% by weight and comprises at least one functional group which is selected from a group comprising or consisting of glycol groups, hydroxyl groups, amino groups, thiol groups, carboxy groups, silyl groups, furfuryl groups, alkyl groups or fluoroalkyl groups, wherein the ink is preferably colourless and the at least one (meth) acrylate in the cured form has a polar fraction of the surface energy between 35% and 70% or between 5% and 30% (method according to Owens-Wendt-Rabel-Kaelble).

13. The method according to claim 12, **characterized in that** an ink is used which contains at least one tenside which is not covalently installed in an ink network formed from the at least one (meth) acrylate.

14. The method according to claim 12 or 13, **characterized in that** an ink is used which has a polarity between 1% and 55%.

15. A counterfeit-protected article, which comprises a substrate with at least one absorbent surface with first and second region, on which at least one surface the first region is printed according to a first print pattern and the second region according to a second print pattern with ink in the form of ink drops and if appropriate is treated according to a treatment method, wherein the first region visually does not differ from the second region at least to the human eye, so that in the preferentially simultaneously dry state of the first and second region the safety feature is not visible to the human eye, **characterized in that** first and second region differ from one another in such a manner that in at least partially simultaneously moist state of the first and second region the first region without chemical reaction visually differs from the second region so that the latent safety feature is visible to the human eye, wherein the first and second print pattern are printed according to different screen densities and/or ink drop sizes in such a manner that at a transition from the first to the second region the screen density and/or the ink drop size increases or decreases continuously and/or in steps or abruptly, wherein the quotient between greatest and smallest screen density and/or the quotient between largest and smallest ink drop size in the first and second region exceeds a screen density limit value and/or ink drop size limit value, wherein the screen density limit value is based on the difference between greatest and smallest screen density and ink drop size limit value to the difference between largest and smallest ink drop size.

16. An article according to claim 15, **characterized in that** the first and second print pattern has different screen densities and/or ink drop sizes in such a manner that the screen density and/or the ink drop size at a transition from the first to the second region monotonously and preferably strictly monotonously increases or decreases, wherein the difference between greatest and smallest screen density and/or the difference between largest and smallest ink drop size in the first and second region exceeds a screen density limit value and/or ink drop size limit value.

17. The article according to claim 15 or 16, **characterized in that** the first and/or the second region of the at least one absorbent surface of the substrate is printed on one side and/or both sides according to the steps b) and c) according to claim 1.

18. The article according to any one of the claims 15 to 17, **characterized in that** the first region and optionally the second region is additionally printed according to a colour further print pattern, which does not form the safety feature in such a manner **in that** ink drops of a colour ink are applied to the absorbent substrate preferably spaced from one another and preferably spaced from the ink drops of the first and/or of the second print pattern, wherein the colour print pattern in the dry and moist state is visible to the eye.

19. The article according to any one of the claims 15 to 18, **characterized in that** the drop/drop distance is in a range between 5 to 150µm, preferably in a range between 15 to 100 µm.

20. The article according to any one of the claims 15 to 19, **characterized in that** the region of the absorbent surface that is printed with the safety feature has a polarity of the surface energy between 1% and 55%.

## Revendications

1. Procédé pour augmenter la sécurité vis-à-vis d'une falsification d'un objet comportant un élément de sécurité latent, comprenant les étapes suivantes:
a) fourniture d'un substrat comportant au moins une surface absorbante ayant un premier et un deuxième domaines,
b) impression du premier domaine de la ou des surfaces absorbantes, avec une encre par application de gouttes d'encre selon un premier schéma d'impression,
c) impression du deuxième domaine selon un deuxième schéma d'impression,
d) si nécessaire, traitement des domaines imprimés selon les étapes (b) et/ou (c), ou non-modifiés, de telle sorte que, après le traitement, le premier domaine ne se distingue pas du point de vue optique du premier domaine, de telle sorte que l'élément de sécurité ne soit pas perceptible pour l'oeil,
**caractérisé en ce que**
e) les gouttes d'encre de l'encre sont disposées sur le substrat absorbant, de préférence à une certaine distance les unes des autres, et le premier et le deuxième schémas d'impression se distinguent par le fait que, lors de l'application d'un liquide sur le premier et le deuxième domaines, sans qu'il se produise une réaction chimique, le premier domaine se distingue d'un point de vue optique du deuxième domaine, de telle sorte que l'élément de sécurité soit perceptible pour l'oeil et que, avec une évaporation croissante du liquide, les différences optiques deviennent de plus en plus faibles, jusqu'à ce que les deux domaines ne se distinguent plus l'un de l'autre d'un point de vue optique, de telle sorte que l'élément de sécurité latent soit de nouveau invisible, le premier et le deuxième schémas d'impression étant imprimés selon des densités de trame et/ou des grosseurs de gouttes d'encre différentes, de telle sorte que, au niveau d'une transition entre le premier et le deuxième domaines, la densité de trame et/ou la grosseur des gouttes d'encre augmente ou diminue d'une manière continue et/ou par paliers ou d'une manière abrupte, le rapport entre la densité de trame la plus grande et la densité de trame la plus petite, et/ou le rapport entre la grosseur des gouttes d'encre la plus grande et la grosseur des gouttes d'encre la plus petite dépasse, dans le premier et le deuxième domaines, une valeur limite de la densité de trame et/ou une valeur limite de la grosseur des gouttes d'encre, la valeur limite de la densité de trame étant rapportée à la différence entre la densité de trame la plus grande et la densité de trame la plus petite, et la valeur limite de la grosseur des gouttes d'encre étant rapportée à la différence entre la grosseur des gouttes d'encre la plus grande et la grosseur des gouttes d'encre la plus petite.

2. Procédé selon la revendication 1, **caractérisé en ce que** le premier et le deuxième schémas d'impression sont imprimés, selon des densités de trame et/ou des grosseurs de gouttelettes d'encre différentes, de telle sorte que, au niveau d'une transition entre le premier et le premier et le deuxième domaines, la densité de trame et/ou la grosseur des gouttes d'encre augmente ou diminue d'une manière monotone ou de préférence strictement monotone, la différence entre la densité de trame la plus grande et la densité de trame la plus petite et/ou la différence entre la grosseur des gouttes d'encre la plus grande et la grosseur des gouttes d'encre la plus petite dans le premier et le deuxième domaines dépassant une valeur limite de la densité de trame et/ou une valeur limite de la grosseur des gouttes d'encre.

3. Procédé selon la revendication 1 ou 2, **caractérisé en ce que** les étapes (b) et/ou (c) et/ou (d) sont mises en oeuvre séparément dans le temps et/ou simultanément, et l'étape (d) est mise en oeuvre éventuellement entre l'étape (b) et l'étape (c), et/ou en tant que dernière étape.

4. Procédé selon l'une des revendications précédentes, **caractérisé en ce que** le premier et/ou le deuxième domaines de la ou des surfaces absorbantes du substrat sont imprimés sur une face et/ou sur les deux faces selon les étapes (b) et (c).

5. Procédé selon l'une des revendications précédentes, **caractérisé en ce que** le premier domaine et en option le deuxième domaine sont imprimés selon un motif d'impression coloré supplémentaire, le troisième, qui ne forme pas l'élément de sécurité, de telle sorte que, alors que des gouttes d'encre d'une encre colorée sont, sur le substrat absorbant, appliquées de préférence à une certaine distance les unes des autres et de préférence à une certaine distance des gouttes d'encre du premier et/ou du deuxième schéma d'impression, le motif d'impression coloré devienne perceptible pour l'oeil à l'état sec et à l'état humide.

6. Procédé selon l'une des revendications précédentes, **caractérisé en ce que** le traitement de l'encre a lieu par irradiation et/ou par échauffement et/ou par réaction chimique et/ou par attente dans le temps, ce à l'occasion de quoi a lieu une polymérisation au moins partielle et/ou un séchage au moins partiel de l'encre ou de l'élément de sécurité.

7. Procédé selon l'une des revendications précédentes, **caractérisé en ce que** l'application d'un liquide a lieu sur une face et/ou sur les deux faces, sur le premier et/ou le deuxième domaines de la ou de surfaces absorbantes.

8. Procédé selon l'une des revendications précédentes, **caractérisé en ce que** la distance goutte/goutte est de préférence comprise dans une plage de 5 à 150 µm, et de préférence dans une plage de 15 à 100 µm.

9. Procédé selon l'une des revendications précédentes, **caractérisé en ce qu'**on utilise un solvant polaire en tant que liquide pour la visualisation de l'élément de sécurité.

10. Procédé selon l'une des revendications précédentes, **caractérisé en ce que** le liquide polaire est choisi dans un groupe comprenant l'eau, les alcools, les éthers, les cétones, les esters ou les hydrocarbures halogénés, ou en est constitué.

11. Procédé selon l'une des revendications précédentes, **caractérisé en ce qu'**on utilise en tant qu'encre une encre à base d'au moins un (méth)acrylate.

12. Procédé selon la revendication 11, **caractérisé en ce que** le (méth)acrylate y est contenu selon une proportion comprise entre 50 % en poids et 99 % en poids et comprend au moins un groupe fonctionnel qui est choisi dans un groupe comprenant les groupes glycol, les groupes hydroxy, les groupes amino, les groupes thiol, les groupes carboxy, les groupes silyle, les groupes furfuryle, les groupes alkyle ou les groupes fluoralkyle, ou en étant constitué, l'encre étant de préférence incolore, et le ou les (méth)acrylates présentant, sous leur forme durcie, une proportion polaire de l'énergie superficielle comprise entre 35 % et 70 % ou entre 5 % et 30 % (méthode d'Owens-Wendt-Rabel-Kaelble).

13. Procédé selon la revendication 12, **caractérisé en ce qu'**on utilise une encre qui contient au moins un tensioactif qui n'est pas incorporé d'une manière covalente dans un réseau d'encre formé du ou des (méth)acrylates.

14. Procédé selon la revendication 12 ou 13, **caractérisé en ce qu'**on utilise une encre qui présente une polarité comprise entre 1 % et 55 %.

15. Objet présentant une sécurité vis-à-vis d'une falsification, qui comprend un substrat ayant au moins une surface absorbante comportant un premier et un deuxième domaines, sur laquelle au moins une surface le premier domaine est imprimé selon un premier schéma d'impression, et le deuxième domaine selon un deuxième schéma d'impression, avec une encre sous la forme de gouttes d'encre, et sont éventuellement traités selon une méthode de traitement, ce en conséquence de quoi le premier domaine ne se distingue pas, d'un point de vue optique, du deuxième domaine, au moins pour l'oeil humain, de telle sorte que, dans l'état de préférence simultanément sec du premier et du deuxième domaines, l'élément de sécurité soit invisible pour l'oeil humain, **caractérisé en ce que** le premier et le deuxième domaines se distinguent par le fait que, dans un état au moins partiellement simultanément humide du premier et du deuxième domaines, le premier domaine se distingue sans réaction chimique, d'un point de vue optique, du deuxième domaine, de telle sorte que l'élément de sécurité latent soit visible pour l'oeil humain, le premier et le deuxième schémas d'impression étant imprimés selon des densités de trame et/ou des grosseurs de gouttes d'encre différentes de telle sorte que, au niveau d'une transition entre le premier domaine et le deuxième domaines, la densité de trame et/ou la grosseur des gouttes d'encre augmente ou diminue d'une manière continue et/ou par paliers ou d'une manière abrupte, le rapport entre la densité de trame la plus grande et la densité de trame la plus petite et/ou le rapport entre la grosseur des gouttes d'encre la plus grande et la grosseur des gouttes d'encre la plus petite dépassant dans le premier et dans le deuxième domaines une valeur limite de la densité de trame et/ou une valeur limite de la grosseur des gouttes d'encre, la valeur limite de la densité de trame étant rapportée à la différence entre la densité de trame la plus grande et la densité de trame la plus petite, et la valeur limite de la grosseur des gouttes d'encre étant rapportée à la différence entre la grosseur des gouttes d'encre la plus grande et la grosseur des gouttes d'encre la plus petite.

16. Objet selon la revendication 15, **caractérisé en ce que** le premier et le deuxième schémas d'impression comprennent des densités de trame et/ou des grosseurs de gouttes d'encre différentes de telle sorte que la densité de trame et/ou la grosseur des gouttes d'encre au niveau d'une transition entre le premier et le deuxième domaines augmentent ou diminuent d'une manière monotone ou de préférence strictement monotone, la différence entre la densité de trame la plus grande et la densité de trame la plus petite et/ou la différence entre la grosseur des gouttes d'encre la plus grande et la grosseur des gouttes d'encre la plus petite dans le premier et le deuxième domaines dépassant une valeur limite de la densité de trame et/ou une valeur limite de la grosseur des gouttes d'encre.

17. Objet selon la revendication 15 ou 16, **caractérisé en ce que** le premier et/ou le deuxième domaines de l'au moins une surface absorbante du substrat sont imprimés sur une face et/ou sur les deux faces selon les étapes (b) et (c) selon la revendication 1.

18. Objet selon l'une des revendications 15 à 17, **caractérisé en ce que** le premier domaine et en option le deuxième domaine sont en outre, selon un motif imprimé coloré supplémentaire, qui ne forme pas l'élément de sécurité, imprimés de telle sorte que, par le fait que des gouttes d'encre d'une encre colorée sont appliquées sur le substrat absorbant de préférence à une certaine distance les unes des autres et de préférence à une certaine distance des gouttes d'encre du premier et/ou du deuxième schémas d'impression, le motif imprimé coloré soit visible pour l'oeil à l'état sec et à l'état humide.

19. Objet selon l'une des revendications 15 à 18, **caractérisé en ce que** la distance goutte/goutte est comprise dans une plage de 5 à 150 µm, de préférence dans une plage de 15 à 100 µm.

20. Objet selon l'une des revendications 15 à 19, **caractérisé en ce que** le domaine de la surface absorbante, portant en impression l'élément de sécurité, présente une polarité de l'énergie superficielle comprise entre 1 % et 55 %.
